(19) Europäisches Patentamt
European Patent Office
Office européen des brevets

(11) **EP 4 440 032 A1**

(12) **EUROPEAN PATENT APPLICATION**
published in accordance with Art. 153(4) EPC

(43) Date of publication:
**02.10.2024  Bulletin 2024/40**

(21) Application number: **22909664.9**

(22) Date of filing: **28.11.2022**

(51) International Patent Classification (IPC):
**H04L 9/32** (2006.01)          **G06F 21/00** (2013.01)
**H04L 9/08** (2006.01)

(52) Cooperative Patent Classification (CPC):
**G06F 16/27; G06F 21/00; H04L 9/08; H04L 9/32;
H04L 9/40**

(86) International application number:
**PCT/CN2022/134661**

(87) International publication number:
**WO 2023/116349 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.12.2021  CN 202111593395**

(71) Applicant: **Huawei Technologies Co., Ltd.
Shenzhen, Guangdong 518129 (CN)**

(72) Inventors:
• **PARTHIPAN, Loganathan
  Guildford, Surrey GU2 7XH (GB)**

• **CHEN, Liqun
  Guildford, Surrey GU2 7XH (GB)**
• **NEWTON, Christopher J.P.
  Guildford, Surrey GU2 7XH (GB)**
• **LIU, Fei
  Shenzhen, Guangdong 518129 (CN)**
• **WANG, Donghui
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **TRUSTED ATTESTATION METHOD AND COMMUNICATION APPARATUS**

(57)     A trusted attestation method and a communication apparatus are provided to improve running efficiency of remote attestation of trusted computing. The method is as follows: A first node obtains information about a first blockchain, and the first node determines attestation information based on the information about the first blockchain. The attestation information is used to remotely attest whether the first node is trusted. The information about the first blockchain may be used as a common random number that is generated by the first blockchain based on a consensus and that can be used by a plurality of nodes. Therefore, the information about the first blockchain may be used as a challenge value for performing security measurement by the plurality of nodes. The attestation information may be verified by any verifier to implement measurement for one time and verification for a plurality of times, so that the first node does not need to establish a separate "challenge-response" procedure with each verifier. In this way, expansion of trusted measurement can be improved, running efficiency of remote attestation can be improved, and verification requirements of massive devices in a high-concurrency and low-latency application scenario can be met.

FIG. 3

## Description

## CROSS-REFERENCE TO RELATED APPLICATIONS

This application claims priority to Chinese Patent Application No. 202111593395.7, filed with the China National Intellectual Property Administration on December 23, 2021 and entitled "TRUSTED ATTESTATION METHOD AND COMMUNICATION APPARATUS", which is incorporated herein by reference in its entirety.

## TECHNICAL FIELD

Embodiments of this application relate to the field of computer security technologies, and in particular, to a trusted attestation method and a communication apparatus.

## BACKGROUND

With rapid development of computer technologies, in a distributed computing environment, a security requirement for a node is increasingly high. In this case, how to attest that nodes that communicate with each other are secure and trusted has become an important topic in a computer security field. Platform trusted attestation (referred to as trusted attestation for short) in a trusted computing field is a research focus of information security. A trusted platform module (trusted platform module, TPM) is a basis in a trusted computing technology. The TPM is a security chip embedded in a hardware platform. A storage root of a key tree supporting a security system is preset in the TPM. By properly using various trusted computing technologies, a TPM trusted root can be used as a start point and then trusted computing is gradually expanded to an entire hardware platform, to construct a hardware-based trust chain and finally complete trusted transfer from underlying hardware to an upper-layer system, thereby establishing a set of trusted computing environments on a local host. Although a trusted computing environment can be established on a node, for an external node, it cannot be determined that the node has a trusted computing environment, and it cannot be determined whether communication with the node is secure. Remote (remote) attestation is a process in which a party that sends an attestation request confirms an identity and status configuration information of a remote platform. In other words, it is a process of confirming whether the remote platform is trusted. The remote attestation enables an attestation requester to detect a change of an attested node, to avoid sending private information or an important command to an insecure or security-compromised node. The remote attestation is also an important method for establishing a trust relationship between nodes, and is an important means for a node to expand trust externally. Especially in a complex network environment, it is particularly important to establish a trust relationship using the remote attestation.

Nodes in remote attestation of trusted computing include an attester (attester) and a verifier (verifier). The attester reports an integrity status of a target node to the verifier through local measurement, so that the verifier can verify whether software and hardware components of the target node are run as expected.

Currently, running efficiency of the remote attestation of trusted computing is relatively low, and how to improve the running efficiency of the remote attestation is an issue to be considered.

## SUMMARY

Embodiments of this application provide a trusted attestation method and a communication apparatus, to improve running efficiency of remote attestation of trusted computing.

According to a first aspect, a trusted attestation method is provided. The method may be performed by a first node, or may be performed by a component of the first node. The first node is used as an example. The method may be implemented by using the following steps: The first node obtains information about a first blockchain, and the first node determines attestation information based on the information about the first blockchain. The attestation information is used to remotely attest whether the first node is trusted. The information about the first blockchain may be used as a common random number that is generated by the first blockchain based on a consensus and that can be used by a plurality of nodes. Therefore, the information about the first blockchain may be used as a challenge value for performing security measurement by the plurality of nodes. The first node generates attestation information by referencing a common recognizable random number generated by a trusted third party as a challenge value, and the attestation information may be verified by any verifier to implement measurement for one time and verification for a plurality of times, so that the first node does not need to establish a separate "challenge-response" procedure with each verifier. In this way, expansion of trusted measurement can be improved, running efficiency of remote attestation can be improved, and verification requirements of massive devices in a high-concurrency and low-latency application scenario can be met.

In a possible design, the information about the first blockchain includes any one or more types of the following information: a timestamp of a first block, a hash value of the first block, a hash value of a previous block of the first block, a hash string of a plurality of blocks including the first block, a merkle (merkle) tree root of the plurality of blocks including the first block, a random number in the first block, a timestamp of a first transaction, a hash value of the first transaction, or a hash string of a plurality of transactions including the first transaction. The first block is a block on the first blockchain, and the first transaction is a transaction on the first blockchain. The blockchain is used as a tamper-proof platform. The first node may upload the attestation information to the first blockchain for a plurality of times. The attestation information of each time or digest information about the attestation information is stored in the first blockchain, which ensures that content of the attestation information is correct and is tamper-proof. The attestation information is determined based on the information about the first blockchain, and the information about the first blockchain is traceable. Therefore, the attestation information of each time is historical and traceable. For example, if the first node determines the attestation information based on the timestamp of the first block, there is a correspondence between the attestation information and the timestamp. The attestation information indicates a result of whether the first node is trusted at a time corresponding to the timestamp. As a verifier, a second node may verify historical trustworthiness of the first node. The second node may obtain historical attestation information about the first node based on the first blockchain, verify whether the first node is historically trusted, and obtain an attestation result indicating whether the first node is historically trusted.

In a possible design, the first node may further send the attestation information to the first blockchain. The first node may be any node that needs to upload its own attestation information. The first node sends the attestation information to the first blockchain. The attestation information may be used by any second node that needs to verify whether the first node is trusted. In this way, the first node only needs to generate one piece of attestation information, and the attestation information may be used by any other second node for verification. Therefore, computing complexity of trusted computing is reduced, running efficiency is relatively high, and resources are saved, which is more applicable to a high-concurrency and low-latency application scenario.

In a possible design, the first node may further send the attestation information to the first blockchain via a smart contract. The first node may send the attestation information to the smart contract, and the smart contract sends the attestation information to the first blockchain. The smart contract is deployed on a blockchain node on the first blockchain. The attestation information for remote attestation is uploaded to the first blockchain based on the smart contract, which is applicable to a plurality of trusted computing technologies, and can improve expansion when the blockchain is applied to the remote attestation.

The first node sends the attestation information to the first blockchain, or the first node sends the attestation information to the first blockchain via the smart contract. Based on this, optionally, the attestation information may be stored in the following manners. The first blockchain includes a second block, and the second block stores the attestation information. Alternatively, the second block stores digest information about the attestation information. The digest information is used to verify integrity of the attestation information, and the attestation information is stored in an off-chain storage node. This can improve consensus efficiency and storage efficiency of the blockchain.

In a case in which the first node sends the attestation information to the first blockchain via the smart contract, the first node may further register identity information with the smart contract. The identity information includes an identity used to record the attestation information. The identity information may also be referred to as a role type. By registering the identity information, the first node may call the smart contract to send the attestation information about the first node to the first blockchain, so that the attestation information is automatically uploaded to the blockchain.

In a possible design, a trigger occasion for the first node to send the attestation information to the smart contract includes the following several types. Triggered by the smart contract: The smart contract triggers an attestation information collection event, and the first node senses the event. When determining that the smart contract triggers the attestation information collection event, the first node sends the attestation information to the smart contract, so that the smart contract sends the attestation information to the first blockchain. The smart contract triggers the attestation information collection event, so that overheads of the first node can be reduced. Alternatively, when the first node determines that the smart contract triggers an attestation information collection event, the first node sends the attestation information to an off-chain relay node, and the off-chain relay node sends the attestation information to the smart contract, so that the smart contract sends the attestation information to the first blockchain. When the first node cannot directly communicate with the blockchain, or there is no communication condition between the first node and the blockchain, the first node may communicate with the blockchain via the off-chain relay node.

In a possible design, that the first node sends the attestation information to the blockchain via a smart contract may be implemented in the following manner: The first node receives request information from an off-chain relay node; and the first node sends the attestation information to the smart contract based on the request information, so that the smart contract sends the attestation information to the first blockchain; or the first node sends the attestation information to the off-chain relay node based on the request information, and the off-chain relay node sends the attestation information to the smart contract, so that the smart contract sends the attestation information to the first blockchain.

In a possible design, the first node periodically sends the attestation information to the smart contract, so that the smart contract sends the attestation information to the blockchain. A periodicity may be preset according to a requirement, to implement periodic measurement of device trustworthiness.

In a possible design, the first node periodically sends the attestation information to an off-chain relay node, and the off-chain relay node sends the attestation information to the smart contract, so that the smart contract sends the attestation information to the blockchain. A periodicity may be preset according to a requirement, to implement periodic measurement of device trustworthiness.

According to a second aspect, a trusted attestation method is provided. The method may be performed by a second node, or may be performed by a component of the second node. The second node is used as an example. The method may be implemented by using the following steps: The second node obtains attestation information about a first node based on a first blockchain, where the attestation information includes information about the first blockchain; and the second node verifies the attestation information based on the information about the first blockchain, to obtain an attestation result indicating whether the first node is trusted. The information about the first blockchain may be used as a common random number that is generated by the first blockchain based on a consensus and that can be used by a plurality of nodes. Therefore, the information about the first blockchain may be used as a challenge value for performing security measurement by the plurality of nodes. As a verifier, the second node may obtain attestation information about an attester based on the first blockchain, and the second node does not need to establish a separate "challenge-response" procedure with each attester. In this way, expansion of trusted measurement can be improved, running efficiency of trusted attestation can be improved, and verification requirements of massive devices in a high-concurrency and low-latency application scenario can be met.

In a possible design, the information about the first blockchain includes any one or more types of the following information: a timestamp of a first block, a hash value of the first block, a hash value of a previous block of the first block, a hash string of a plurality of blocks including the first block, a merkle (merkle) tree root of the plurality of blocks including the first block, a random number in the first block, a timestamp of a first transaction, a hash value of the first transaction, or a hash string of a plurality of transactions including the first transaction. The first block is a block on the first blockchain, and the first transaction is a transaction on the first blockchain. The blockchain is used as a tamper-proof platform. The first node may upload the attestation information to the first blockchain for a plurality of times. The attestation information of each time or digest information about the attestation information is stored in the first blockchain, which ensures that content of the attestation information is correct and is tamper-proof. The attestation information is determined based on the information about the first blockchain, and the information about the first blockchain is traceable. Therefore, the attestation information of each time is historical and traceable. For example, if the first node determines the attestation information based on the timestamp of the first block, there is a correspondence between the attestation information and the timestamp. The attestation information indicates a result of whether the first node is trusted at a time corresponding to the timestamp. As a verifier, the second node may verify historical trustworthiness of the first node. The second node may obtain historical attestation information about the first node based on the first blockchain, verify whether the first node is historically trusted, and obtain an attestation result indicating whether the first node is historically trusted.

In a possible design, that the second node obtains attestation information about a first node from a first blockchain may be implemented in the following manner: The second node sends information about the first node to a smart contract, where the smart contract is deployed on a blockchain node on the first blockchain; and the second node receives the attestation information about the first node from the smart contract. The attestation information about the first node is obtained via the smart contract, which is applicable to a plurality of trusted computing technologies, and can improve expansion when the blockchain is applied to remote attestation.

In a possible design, that the second node obtains attestation information about a first node from a first blockchain may be implemented in the following manner: The second node determines that a smart contract triggers an attestation information verification event; and the second node receives the attestation information about the first node from the smart contract.

In a possible design, the second node may further register identity information with the smart contract. The identity information includes an identity used to read the attestation information. The identity information may also be referred to as a role type. By registering the identity information, the second node may call the smart contract to read the attestation information about the first node from the first blockchain.

In a possible design, the first blockchain includes a second block. The second block stores the attestation information, or the second block stores digest information about the attestation information. The digest information is used to verify integrity of the attestation information. Optionally, the attestation information is stored in an off-chain storage node. The attestation information is stored in the off-chain storage node, so that there is no need to store a large amount of data on the chain, thereby improving storage efficiency.

According to a third aspect, a trusted attestation method is provided. The method may be performed by a first blockchain node, or may be performed by a component of the first blockchain node. The first blockchain node is used as an example. The method may be implemented by using the following steps: The first blockchain node receives a first transaction from a first node, where the first transaction includes attestation information, and the attestation information is generated by the first node based on information about a first blockchain; the first blockchain node verifies the attestation information; and the first blockchain node broadcasts the first transaction to one or more nodes on the first blockchain after verification of the attestation information succeeds. The first blockchain node reviews attestation information that is uploaded to a blockchain, to ensure trustworthiness of the information that is uploaded to the blockchain.

In a possible design, that the first blockchain node verifies the attestation information may be implemented in the following manner: verifying a quote and log attestation to attest that the attestation information is not tampered with, further verifying a timestamp to attest generation time of the attestation information, and finally verifying trustworthiness of the attestation information by using a reference value (reference value).

According to a fourth aspect, a communication apparatus is provided. The communication apparatus may implement the method according to the first aspect. The communication apparatus has a function of the first node. The communication apparatus is, for example, a first node, or a functional module in the first node. The first node is, for example, an attester. Alternatively, the communication apparatus may implement the method according to the second aspect. The communication apparatus has a function of the second node. The communication apparatus is, for example, a second node, or a functional module in the second node. The second node is, for example, a verifier. Alternatively, the communication apparatus may implement the method according to the third aspect. The communication apparatus has a function of the first blockchain node. The communication apparatus is, for example, a first blockchain node, or a functional module in the first blockchain node. In an optional implementation, the communication apparatus may include a one-to-one corresponding module for performing the method/operation/step/action described in the first aspect, the second aspect, or the third aspect. The module may be implemented by a hardware circuit, software, or a combination of a hardware circuit and software. In another optional implementation, the communication apparatus includes a processing unit (also referred to as a processing module sometimes) and a transceiver unit (also referred to as a transceiver module sometimes). The transceiver unit can implement a sending function and a receiving function. The transceiver unit may be referred to as a sending unit (also referred to as a sending module sometimes) when implementing the sending function. The transceiver unit may be referred to as a receiving unit (also referred to as a receiving module sometimes) when implementing the receiving function. The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

When the communication apparatus is configured to perform the method described in the first aspect, the processing unit may include an obtaining unit and a determining unit. The obtaining unit is configured to obtain information about a first blockchain, and the determining unit is configured to determine attestation information based on the information about the first blockchain. The attestation information is used to remotely attest whether the first node is trusted.

Optionally, the sending unit is configured to send the attestation information to the first blockchain. Optionally, the sending unit may be further configured to send the attestation information to a smart contract. The smart contract is deployed on a blockchain node on the first blockchain.

The processing unit may further include a registration unit. The registration unit is configured to register identity information with the smart contract. The identity information includes an identity used to record the attestation information.

Optionally, when the attestation information is sent to the smart contract, the determining unit is configured to determine that the smart contract triggers an attestation information collection event; and the sending unit is configured to send the attestation information to the smart contract, so that the smart contract sends the attestation information to the first blockchain; or the first node sends the attestation information to an off-chain relay node, and the off-chain relay node sends the attestation information to the smart contract, so that the smart contract sends the attestation information to the first blockchain.

Optionally, when the attestation information is sent to the blockchain via the smart contract, the receiving unit is configured to receive request information from an off-chain relay node; and the sending unit is configured to send the attestation information to the smart contract based on the request information, so that the smart contract sends the attestation information to the first blockchain; or the first node sends the attestation information to the off-chain relay node based on the request information, and the off-chain relay node sends the attestation information to the smart contract, so that the smart contract sends the attestation information to the first blockchain.

Optionally, the sending unit is configured to periodically send the attestation information to the smart contract, so that the smart contract sends the attestation information to the blockchain; or the sending unit is configured to periodically send the attestation information to an off-chain relay node, and the off-chain relay node sends the attestation information to the smart contract, so that the smart contract sends the attestation information to the blockchain.

When the communication apparatus is configured to perform the method described in the second aspect, the processing unit may include an obtaining unit and a verification unit. The obtaining unit is configured to obtain attestation information about the first node based on a first blockchain. The attestation information includes information about the first blockchain. The verification unit is configured to verify the attestation information based on the information about the first blockchain, to obtain an attestation result indicating whether the first node is trusted.

Optionally, when the attestation information about the first node is obtained from the first blockchain, the obtaining unit is specifically configured to: send information about the first node to a smart contract, where the smart contract is deployed on a blockchain node on the first blockchain; and receive the attestation information about the first node from the smart contract.

Optionally, when the attestation information about the first node is obtained from the first blockchain, the obtaining unit is specifically configured to: determine that a smart contract triggers an attestation information verification event; and receive the attestation information about the first node from the smart contract.

The processing unit may further include a registration unit. The registration unit is configured to register identity information with the smart contract. The identity information includes an identity used to read the attestation information.

Optionally, the first blockchain includes a second block. The second block stores the attestation information, or the second block stores digest information about the attestation information. The digest information is used to verify integrity of the attestation information, and the attestation information is stored in an off-chain storage node.

When the communication apparatus is configured to perform the method described in the third aspect, the processing unit may be referred to as a verification unit. The receiving unit is configured to receive a first transaction from the first node. The first transaction includes attestation information, and the attestation information is generated by the first node based on information about a first blockchain. The verification unit is configured to verify the attestation information. The sending unit is configured to broadcast the first transaction to one or more nodes on the first blockchain after verification of the attestation information succeeds.

For another example, the communication apparatus includes a processor that is coupled to a memory and that is configured to execute instructions in the memory, to implement the method according to the first aspect, the second aspect, or the third aspect. Optionally, the communication apparatus further includes other components, for example, an antenna, an input/output module, and an interface. These components may be hardware, software, or a combination of software and hardware.

According to a fifth aspect, a computer-readable storage medium is provided. The computer-readable storage medium is configured to store a computer program or instructions, and when the computer program or the instructions are run, the method according to any one of the first aspect to the third aspect is implemented.

According to a sixth aspect, a computer program product including instructions is provided. When the computer program product is run on a computer, the method according to any one of the first aspect to the third aspect is implemented.

According to a seventh aspect, a chip system is provided. The chip system includes a logic circuit (or may be understood as that the chip system includes a processor, and the processor may include a logic circuit or the like), and may further include an input/output interface. The input/output interface may be configured to receive a message, or may be configured to send a message. For example, when the chip system is configured to implement a function of a first node, the input/output interface may be configured to obtain information about a first blockchain. The input/output interface may be a same interface. To be specific, the same interface can implement both a sending function and a receiving function. Alternatively, the input/output interface includes an input interface and an output interface. The input interface is configured to implement a receiving function, that is, configured to receive a message; and the output interface is configured to implement a sending function, that is, configured to send a message. The logic circuit may be configured to perform an operation other than the receiving and sending functions in the first aspect to the third aspect. The logic circuit may be further configured to transmit a message to the input/output interface, or receive a message of another communication apparatus from the input/output interface. The chip system may be configured to implement the method according to any one of the first aspect to the third aspect. The chip system may include a chip, or may include a chip and another discrete device.

Optionally, the chip system may further include a memory. The memory may be configured to store instructions, and the logic circuit may call the instructions stored in the memory to implement a corresponding function.

According to an eighth aspect, a communication system is provided. The communication system may include a first node and a second node, the first node may be configured to perform the method according to the first aspect, and the second node may be configured to perform the method according to the second aspect.

Optionally, the communication system may further include a first blockchain node, and the first blockchain node is configured to perform the method according to the third aspect.

**BRIEF DESCRIPTION OF DRAWINGS**

FIG. 1 is a schematic diagram of an architecture of a remote attestation system according to an embodiment of this application;
FIG. 2 is a schematic diagram of an architecture of a blockchain network according to an embodiment of this application;

FIG. 3 is a schematic flowchart of a trusted attestation method according to an embodiment of this application;

FIG. 4 is a schematic flowchart of another trusted attestation method according to an embodiment of this application;

FIG. 5 is a schematic diagram of a process of writing attestation information into a blockchain according to an embodiment of this application;

FIG. 6 is a schematic diagram of a structure of a remote attestation smart contract according to an embodiment of this application;

FIG. 7 is a schematic diagram of role registration or deregistration according to an embodiment of this application;

FIG. 8 is a schematic flowchart of role registration or deregistration provided by a smart contract according to an embodiment of this application;

FIG. 9 is a schematic diagram of a device registration interface or a device deregistration interface provided by a smart contract according to an embodiment of this application;

FIG. 10 is a schematic flowchart of adding or deleting a device in or from a smart contract according to an embodiment of this application;

FIG. 11 is a schematic diagram of an interface for recording attestation information provided by a smart contract according to an embodiment of this application;

FIG. 12 is a schematic flowchart of recording attestation information by a caller through an interface of a smart contract according to an embodiment of this application;

FIG. 13 is a schematic diagram of an interface for reading attestation information provided by a smart contract according to an embodiment of this application;

FIG. 14 is a schematic flowchart of reading attestation information by a caller through an interface of a smart contract according to an embodiment of this application;

FIG. 15 is a schematic diagram 1 of an implementation process in which a first node sends attestation information to a first blockchain according to an embodiment of this application;

FIG. 16 is a schematic diagram 2 of an implementation process in which a first node sends attestation information to a first blockchain according to an embodiment of this application;

FIG. 17 is a schematic diagram 3 of an implementation process in which a first node sends attestation information to a first blockchain according to an embodiment of this application;

FIG. 18 is a schematic diagram of a structure of a smart contract according to an embodiment of this application;

FIG. 19 is a schematic diagram of a role registration interface or a role deregistration interface provided by a smart contract according to an embodiment of this application;

FIG. 20 is a schematic diagram of an implementation process in which a first node sends attestation information to a first blockchain and a second node obtains the attestation information based on the first blockchain according to an embodiment of this application; and

FIG. 21 is a schematic diagram of a communication apparatus according to an embodiment of this application.

## DESCRIPTION OF EMBODIMENTS

A trusted attestation method provided in embodiments of this application may be applied to a 4th generation (4th generation, 4G) communication system, for example, long term evolution (long term evolution, LTE), or may be applied to a 5th generation (5th generation, 5G) communication system, for example, a 5G new radio (new radio, NR) system, or may be applied to various future-evolved communication systems, for example, a 6th generation (6th generation, 6G) communication system, an integrated air, space, sea, and land communication system, or an integrated access and backhaul (integrated access and backhaul, IAB) scenario. It may be understood that the system architecture and application scenarios that are described in embodiments of this application are intended to describe technical solutions in embodiments of this application more clearly, and do not constitute a limitation on the technical solutions provided in embodiments of this application.

The following describes in detail embodiments of this application with reference to the accompanying drawings.

Embodiments of this application provide a trusted attestation method, apparatus, and system, to improve running efficiency of remote attestation of trusted computing. The method and the apparatus are based on a same technical concept. The method and the apparatus have a similar problem-resolving principle. Therefore, for implementation of the apparatus and the method, refer to each other. Repeated parts are not described in detail.

In the descriptions of this application, terms such as "first" and "second" are merely used for distinction and description, and shall not be understood as an indication or implication of relative importance or an indication or implication of an order.

To describe the technical solutions in embodiments of this application more clearly, the following describes in detail the trusted attestation method, apparatus, and system provided in embodiments of this application with reference to the accompanying drawings.

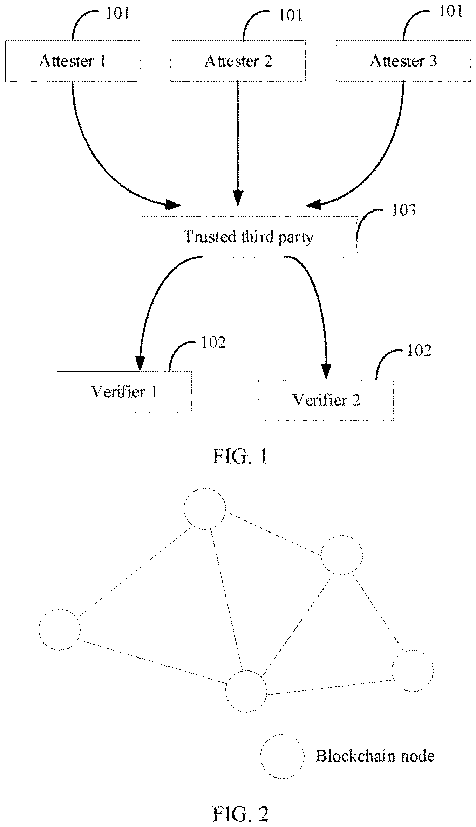

FIG. 1 is a schematic diagram of an architecture of a remote attestation system to which an embodiment of this application is applicable. As shown in FIG. 1, the architecture of the remote attestation system may include an attester 101, a verifier 102, and a trusted third party (trusted third party, TTP) 103. Optionally, the architecture of the remote attestation system may further include an endorser (endorser), and may further include a reference value provider (reference value provider).

There may be one or more attesters 101 and verifiers 102. "More" means two or more. In FIG. 1, an example in which a quantity of attesters 101 is 3 is used, and an example in which a quantity of verifiers 102 is 2 is used. The attester 101 is a platform that is verified and measured, and that is used for attesting a configuration. The verifier 102 is an entity that verifies a platform configuration. The attester and the verifier may have other names. For example, the attester may also be referred to as an attestation party, and the verifier may also be referred to as a verification party. The trusted third party 103 may be a blockchain.

The following describes the blockchain. FIG. 2 is a schematic diagram of an architecture of a blockchain network to which an embodiment of this application is applicable. As shown in FIG. 2, the blockchain network may include a plurality of blockchain nodes. After generating a block, at least one blockchain node broadcasts the block. After receiving the block, another blockchain node performs block verification on the block. After verification succeeds, a local blockchain is updated. "At least one" means one or more. It should be noted that a quantity of blockchain nodes in the blockchain network shown in FIG. 2 is merely an example. It should be understood that the blockchain network may further include more or fewer blockchain nodes. This is not limited in this application. It should be noted that the schematic diagram of the architecture of the blockchain network shown in FIG. 2 is also merely an example, and another layout structure may further exist between the blockchain nodes. This is not limited in this application.

A block may be used to store data, and a plurality of blocks are connected in sequence to form a chain, which is referred to as a blockchain. Main features of the blockchain are as follows: (1) Distributed: One blockchain is replicated into a plurality of copies, and the copies are respectively maintained on different member servers. (2) Tamper-proof: Each block on the blockchain computes a hash (Hash) value based on data stored in the block, and each block on the blockchain records a Hash value of a previous block and a Hash value of the block itself. If content stored in a block changes, a Hash value of the block changes. As a next block of the block stores a Hash value of the block before the change, if the next block performs verification on a Hash value of the block after the change based on the Hash value before the change, verification fails. (3) Traceable: Blocks are connected to form a blockchain. A change history of the entire blockchain can be traced back based on a connection sequence of the blocks on the blockchain.

A remote attestation process of trusted computing can be divided into three phases: integrity measurement, integrity report, and integrity attestation. Generally, remote attestation is a "challenge-response" process. The verifier sends a challenge message to the attester. The challenge message is usually a random number. After receiving the challenge message, the attester performs trusted measurement, and returns a measurement result to the verifier. For example, the attester sends, to the verifier, attestation information signed by using an identity key or a signature key. The verifier performs verification and reasoning on the attestation information to determine whether the attester has a trusted computing environment. For example, a TPM-equipped device may serve as an attester. When the device is started, the TPM obtains measurement values on a system and software of the system, and securely stores these measurement values in a platform configuration register (platform configuration register, PCR). When the verifier sends a request, the TPM reports these values and generates a signature digest (namely, evidence) that can be compared with a reference value.

The remote attestation completed through the "challenge-response" process is point-to-point attestation, which limits expansion of trusted computing. For example, if 10 nodes need to verify each other and a point-to-point attestation manner is used, a total of

$C_{10}^2 = 45$ pairs of attestation are required. Each target node needs to generate nine pieces of attestation information. Even if the evidence is almost the same, resources are required for generating the evidence, thereby causing resource waste and low running efficiency. In a high-concurrency and low-latency application scenario in a 6G network or like, computing complexity of the method is relatively high.

In view of this, an embodiment of this application provides a trusted attestation method. In the method, a blockchain serves as a trusted third party. The method is implemented via a node. The node may include a first node and a second node, and may further include a blockchain node. In embodiments of this application, an operation performed by the "node" may be performed by a device, may be performed by a component (for example, a processor, a chip, or a chip system) of the device, or may be performed by a software module or unit that integrates a logical function. The node may be a server, a personal computer (personal computer, PC), a network device or a terminal device in a communication network, or any device having a computing and storage capability. The node may alternatively be a processor, a chip, or a functional module in the foregoing enumerated devices.

For example, when the node is a network device or a terminal device in a communication network, a concept and a form of the network device or the terminal device are as follows.

The terminal device may also be referred to as user equipment (user equipment, UE), a mobile station (mobile station, MS), a mobile terminal (mobile terminal, MT), or the like, and is a device that provides voice or data connectivity for a user, or may be an internet of things device. For example, the terminal device includes a handheld device, a vehicle-mounted device, or the like that has a wireless connection function. The terminal device may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. It should be understood that the terminal device in embodiments of this application may alternatively be a chip in the terminal device, or may be a communication apparatus, a unit, or a module that has a user equipment to user equipment (UE to UE, U2U) communication function, for example, a vehicle-mounted communication apparatus, a vehicle-mounted communication module, or a vehicle-mounted communication chip. In embodiments of this application, the terminal device may alternatively be a road side unit (road side unit) in an internet of vehicles communication system, or a communication apparatus or a communication chip in the road side unit.

The network device may be a device in a radio access network, the radio access network may include one or more radio access network devices, and the network device may be a radio access network device. The terminal device may be connected to the radio access network device in a wireless manner. The communication system may further include a core network (core network, CN), and the radio access network device is connected to the core network in a wireless or wired manner. A core network device and the radio access network device may be different independent physical devices, or functions of the core network device and logical functions of the radio access network device may be integrated into one physical device, or some functions of the core network device and some functions of the radio access network device may be integrated into one physical device. The radio access network device may be various base stations, for example, an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, and a base station in a future mobile communication system, may be a device, for example, an access node in a Wi-Fi system, or may be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the protocol layers, refer to related technical specifications of a 3rd generation partnership project (3rd generation partnership project, 3GPP). The radio access network device may be a macro base station, may be a micro base station or an indoor station, or may be a relay node, a donor (donor) node, or the like. A specific technology and a specific device form that are used by the radio access network device are not limited in embodiments of this application. In embodiments of this application, a function of the base station may be performed by a module (for example, a chip) in the base station, or may be performed by a control subsystem including the function of the base station. The control subsystem including the function of the base station herein may be a control center in the foregoing application scenarios such as the smart grid, the industrial control, the smart transportation, and the smart city. A function of the terminal device may alternatively be performed by a module (for example, a chip or a modem) in the terminal device, or may be performed by an apparatus including the function of the terminal device.

The first node may serve as an attester, or the first node is a target node for which the attester is responsible. The second node may serve as a verifier. The first node and the second node may be blockchain nodes, or may not be blockchain nodes.

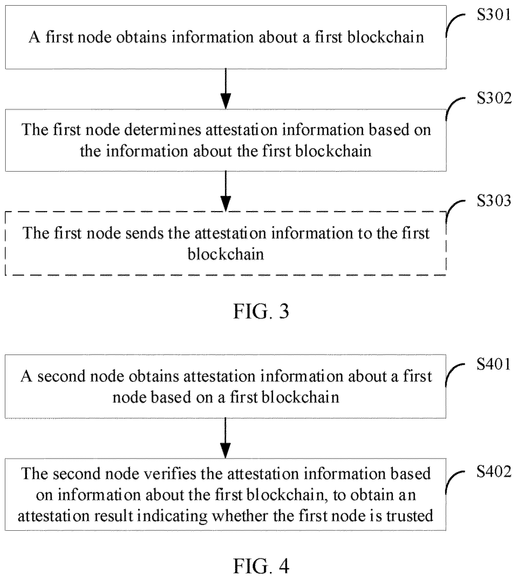

As shown in FIG. 3, a specific procedure of a trusted attestation method provided in an embodiment of this application is described as follows. The method is described from a side of a first node.

S301: The first node obtains information about a first blockchain.

S302: The first node determines attestation information based on the information about the first blockchain.

The attestation information is used to remotely attest whether the first node is trusted.

As shown in FIG. 4, a specific procedure of another trusted attestation method provided in an embodiment of this application is described as follows. The method is described from a side of a second node.

S401: The second node obtains attestation information about a first node based on a first blockchain.

The attestation information includes information about the first blockchain.

S402: The second node verifies the attestation information based on the information about the first blockchain, to obtain an attestation result indicating whether the first node is trusted.

The embodiment in FIG. 4 may independently form a solution that needs to be protected in this application, or may be combined with the embodiment in FIG. 3 to form a solution that needs to be protected in this application. For example, S401 is performed after S302.

With reference to the system architecture in FIG. 1, the first node may be the attester 101, the second node may be the verifier 102, and the first blockchain may be the trusted third party 103.

In the embodiment in FIG. 3 and the embodiment in FIG. 4, the information about the first blockchain may be a common random number generated by the first blockchain based on a consensus. Therefore, the information about the first blockchain may be used as a challenge value for performing security measurement by a plurality of nodes. The first node generates attestation information by referencing a common recognizable random number generated by a trusted third party as a challenge value, and the attestation information may be verified by any verifier to implement measurement for one time and verification for a plurality of times, so that the first node does not need to establish a separate "challenge-response" procedure with each verifier. As a verifier, the second node may obtain attestation information about an attester based on the first blockchain, and the second node does not need to establish a separate "challenge-response" procedure with each attester. In this way, expansion of trusted measurement can be improved, running efficiency of remote attestation can be improved, and verification requirements of massive devices in a high-concurrency and low-latency application scenario can be met.

With reference to the embodiments in FIG. 3 and FIG. 4, the following describes some optional implementations provided in embodiments of this application.

The first blockchain includes a first block. When the first node obtains the information about the first blockchain, the first block is a latest block on the first blockchain, or the first block is a block with a highest height on the first blockchain. The information about the first blockchain may be any one or any combination of the following: a timestamp of the first block, a hash value of the first block, a hash value of a previous block of the first block, a hash string of a plurality of blocks including the first block, a merkle (merkle) tree root of the plurality of blocks including the first block, or a random number in the first block.

The attestation information about the first node may be used to attest whether at least one piece of software information, hardware information, or system information about the first node is trusted.

A process in which the first node determines the attestation information based on the information about the first blockchain may be considered as a measurement process. The first node performs integrity measurement on the at least one piece of software information, hardware information, or system information about the first node based on the information about the first blockchain, to obtain the attestation information. The attestation information may include one or more of the following: the information about the first blockchain, a PCR value (PCR value), a measurement log, or a measurement log template.

Based on the embodiment in FIG. 3, after S302, S303 may be further included.

S303: The first node sends the attestation information to the first blockchain.

That the first node sends the attestation information to the first blockchain may be understood as that the first node sends the attestation information to a blockchain node on the first blockchain. In embodiments of this application, an interaction between a blockchain and another node may be understood as an interaction between a blockchain node and another node.

The following provides two possible implementations in which the first node sends the attestation information to the blockchain node on the first blockchain.

In a possible implementation 1, the first node may generate a transaction based on the information about the first blockchain. The transaction includes the attestation information. The first node sends the transaction to the blockchain node on the first blockchain. The blockchain node on the first blockchain may be denoted as a first blockchain node. After the first blockchain node receives the transaction, optionally, the first blockchain node may verify the transaction. A verification process may be as follows: verifying a quote and log attestation to attest that the attestation information is not tampered with, verifying a timestamp to attest generation time of the attestation information, and finally verifying trustworthiness of the attestation information by using a reference value (reference value). The transaction is broadcast after the verification succeeds. If a second blockchain node that has an accounting right exists in another blockchain node on the first blockchain, the second blockchain node generates a second block based on the transaction. The second blockchain node may generate the second block by packaging the transaction together with another transaction. The second blockchain node broadcasts the second block. After receiving the second block, another blockchain node other than the second blockchain node on the first blockchain updates a local blockchain. Optionally, after receiving the second block, the another blockchain node other than the second blockchain node on the first blockchain may first verify the second block, and then verify the transaction after the second block is successfully verified. For a verification process, refer to the process in which the first blockchain node verifies the transaction. After the transaction is successfully verified, the local blockchain is updated. In this way, a process of uploading the attestation information to the blockchain is completed. The implementation 1 is applicable to a case in which a blockchain node can add data to a block without a smart contract.

In another possible implementation 2, the first node sends the attestation information to a smart contract. In other words, the first node sends the attestation information to the first blockchain via the smart contract. The smart contract is deployed on a blockchain node on the first blockchain. For example, the smart contract may be deployed on all blockchain nodes on the first blockchain. The first node calls the smart contract, and writes a parameter into the smart contract in a calling process. The parameter includes the attestation information. The smart contract generates a transaction based on the written parameter. The transaction includes the attestation information. The smart contract sends the transaction to a blockchain node on the first blockchain, and the blockchain node on the first blockchain may be denoted as a first blockchain node. For an operation performed after the first blockchain node receives the transaction, refer to the description in the implementation 1. Details are not described herein again. It should be noted that an interaction between the smart contract and another node in embodiments of this application may be understood as an interaction between a blockchain node on which a virtual machine running the smart contract is located and the another node. An operation performed by the smart contract may be understood as an operation performed by the blockchain node on which the virtual machine running the smart contract is located.

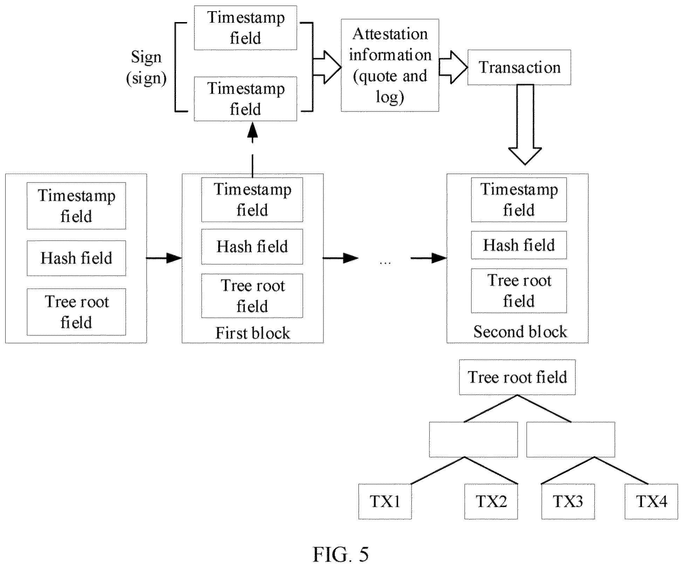

The foregoing provides the possible implementations in which the first node sends the attestation information to the first blockchain. The attestation information may be stored in the following several forms in the first blockchain. The attestation information may be stored in the second block. In other words, the second block stores a complete record of the attestation information. Alternatively, the second block records digest information about the attestation information. The digest information is used to verify integrity of the attestation information, and the attestation information is stored in an off-chain storage node. The off-chain storage node is a node located outside the first blockchain. The digest information may be, for example, a hash value of the attestation information. As shown in FIG. 5, an example in which the information about the first blockchain is a timestamp of the first block and an example of the implementation 1 are used to describe a process in which the attestation information is uploaded to a blockchain. FIG. 5 shows blocks on the first blockchain. An ellipsis in FIG. 5 indicates that there may be one or more blocks between two blocks. The first blockchain may include more or fewer blocks. A quantity of blocks in FIG. 5 is merely an example. A structure of each block includes a plurality of fields, and different fields are used to store different data. A structure of a block and a name of a field that are shown in FIG. 5 are merely examples, and the block may further include more or fewer fields. This is not limited in this application. As shown in FIG. 5, for example, a block may include a tree root field, a hash field, and a timestamp field. The tree root field is, for example, also referred to as an m_root field, or may have another name. The hash field may also be referred to as a p_hash field, or may have another name. The timestamp field is, for example, also referred to as a timestamp field, or may have another name. A timestamp field of the first block is used for a timestamp of the first block. When the first node needs to upload the attestation information to the first blockchain, a timestamp of a current latest block or a timestamp of a current highest block on the blockchain, is obtained. For example, a timestamp of the first block is obtained. The first node generates the attestation information based on the timestamp of the first block. In FIG. 5, a TPM is used as an example. A process in which the first node generates the attestation information is as follows: performing signature (sign) by using a PCR value and a timestamp, and generating a quote (quote). The attestation information includes the quote and an original log (log). A transaction is generated based on the attestation information or the hash value of the attestation information, and the transaction is published to the blockchain. Specifically, the first node sends the generated transaction to the first blockchain node on the first blockchain. Finally, the second blockchain node generates the second block based on the transaction. In FIG. 5, the second blockchain node generates the second block by packaging a plurality of transactions. The plurality of transactions are illustrated by taking four transactions as an example, and are respectively represented by TX1, TX2, TX3, and TX4.

It may be understood that the first blockchain node and the second blockchain node may be a same node or different nodes. The first block and the second block may be a same block or different blocks. For example, in a case in which upload to the blockchain is relatively timely, the attestation information about the first node may be uploaded to the first block.

Based on the embodiment in FIG. 4, the following provides optional implementations in which the second node obtains the attestation information about the first node based on the first blockchain.

If the attestation information is stored in the second block on the first blockchain, the second node obtains the attestation information from the second block. The second node performs verification based on the attestation information, to obtain an attestation result indicating whether the first node is trusted.

If the second block stores digest information about the attestation information, and the attestation information is stored in the off-chain storage node, the second node obtains the digest information from the second block, and verifies integrity of the attestation information based on the digest information, to obtain an attestation result indicating whether the first node is trusted.

That the second node may obtain the attestation information or the digest information from the second block may be considered as obtaining the attestation information or the digest information from the transaction. The second node first needs to obtain a transaction identifier (ID), and obtains, from the blockchain node on the first blockchain based on the transaction ID, a transaction corresponding to the transaction ID.

In a possible implementation 3, when the second node needs to verify trustworthiness of the first node, the second node may send a request to the first node, and the first node sends, to the second node based on the request, a transaction ID corresponding to the attestation information, so that the second node obtains the transaction ID.

In a possible implementation 4, the first node triggers an event based on a timer. After the timer expires, the event is triggered, and the first node sends, to the second node, a transaction ID that the attestation information or the digest information belongs to. The second node receives the transaction ID from the first node.

In a possible implementation 5, when the second node needs to verify trustworthiness of the first node, the second node may send information about the first node to the smart contract. The information about the first node may be, for example, an identity number (ID) of the first node. The smart contract is deployed on a blockchain node on the first blockchain. For example, the smart contract may be deployed on all blockchain nodes on the first blockchain. The second node calls the smart contract, and inputs a parameter to the smart contract in a calling process. The parameter may include the information about the first node. The smart contract feeds back the attestation information about the first node to the second node based on the input parameter. The second node obtains, based on the attestation information, an attestation result indicating whether the first node is trusted. Optionally, the smart contract may feed back, to the second node based on the input parameter, an attestation result indicating whether the first node is trusted. In this case, the smart contract verifies, based on the attestation information, whether the first node is trusted.

Based on the embodiment in FIG. 4, after obtaining the attestation result indicating whether the first node is trusted, the second node may send the attestation result to the first blockchain. For an implementation in which the second node sends the attestation result to the first blockchain, refer to the implementation in which the first node sends the attestation information to the first blockchain. In other words, for a process in which the attestation result is uploaded to a blockchain, refer to a process in which the attestation information is uploaded to a blockchain.

It can be learned from the foregoing descriptions of the embodiment in FIG. 3 and the embodiment in FIG. 4 that the blockchain is used as a tamper-proof platform, the first node may upload the attestation information to the first blockchain for a plurality of times, and the attestation information of each time or digest information about the attestation information is stored in the first blockchain, which ensures that content of the attestation information is correct and is tamper-proof. The attestation information is determined based on the information about the first blockchain, and the information about the first blockchain is traceable. Therefore, the attestation information of each time is historical and traceable. For example, if the first node determines the attestation information based on the timestamp of the first block, there is a correspondence between the attestation information and the timestamp. The attestation information indicates a result of whether the first node is trusted at a time corresponding to the timestamp. As a verifier, the second node may verify historical trustworthiness of the first node. The second node may obtain historical attestation information about the first node based on the first blockchain, verify whether the first node is historically trusted, and obtain an attestation result indicating whether the first node is historically trusted. For example, when a device such as a regulatory unit, a third party that needs a test, or a node that newly accesses a network needs to measure historical trustworthiness of the network, historical attestation information about the network needs to be obtained from the blockchain to complete historical remote attestation.

As described in the foregoing embodiments, the first node may send the attestation information about the first node to the first blockchain, and the second node may obtain the attestation information about the first node based on the first blockchain, both of which may be completed via the smart contract. The following describes an optional implementation that is completed via the smart contract.

The smart contract includes some code and data. The code and the data jointly form an executable file unit. The executable file unit may be run on a virtual machine defined by a blockchain, and is stored in a leaf node of a state tree. Therefore, the smart contract is an account with balance, code, and storage. The smart contract is triggered when a transaction including sufficient funds and any input parameter related to the smart contract is sent to this account. Input parameters of data, a storage tree, and a transaction under a code tree are sent to a virtual machine running on a node. A new block on the blockchain includes an output of the virtual machine as an update to a storage root and a storage root hash. With other changes, a state root hash of the blockchain also changes. This new state root hash will be a part of the new block. Old data may be linked to a new tree. This avoids duplication of data.

Smart contracts are permanent, but they need maintenance. Code errors and design defects need to be corrected through code upgrade and database migration. When a life cycle ends, the contract needs to be destroyed. Maintenance of a smart contract depends on a specific blockchain on which the smart contract is deployed. Usually, a new contract is created and data in an old contract is migrated for use. Since the updated contract is a new contract, it will have a new address and needs to be published.

To trigger the smart contract, a transaction needs to be initiated from another account. The transaction also needs to include a cost fee sufficient to pay for an operation of running the smart contract. Sometimes, the smart contract needs to obtain some values from an outside world or trigger some operations in the outside world.

In embodiments of this application, the first node sends the attestation information about the first node to the first blockchain via the smart contract (which may be denoted as a first smart contract), and the second node obtains the attestation information about the first node based on the first blockchain via the smart contract (which may be denoted as a second smart contract). The first smart contract and the second smart contract may be one or two different smart contracts.

First, management of a remote attestation smart contract is described. The remote attestation smart contract is referred to as a smart contract for short, and may include the first smart contract and the second smart contract.

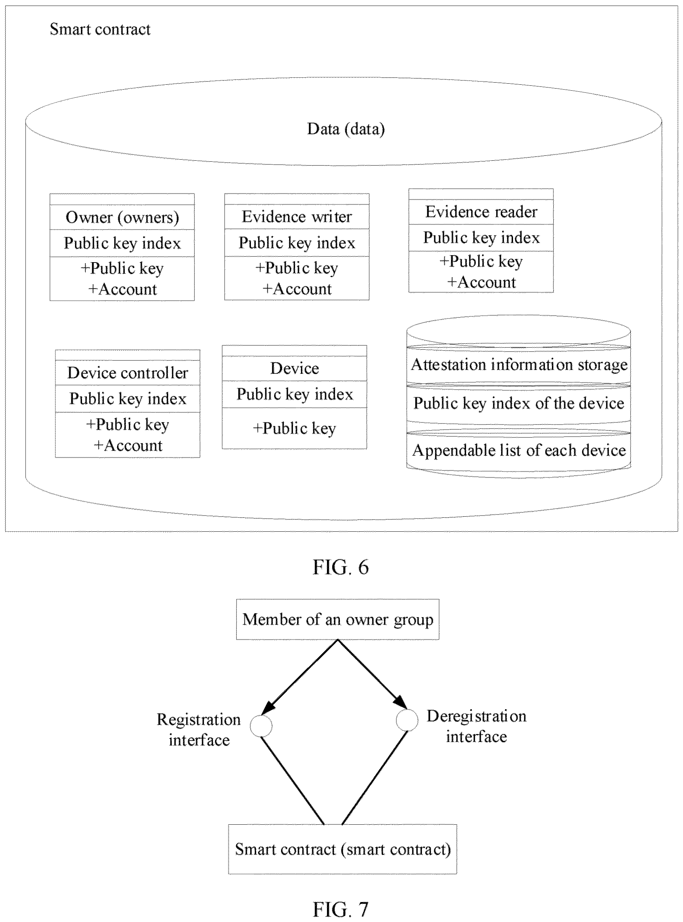

An owner (for example, an enterprise participant or an organization that supervises the attestation solution) of a remote attestation solution specifies a deployer, and the deployer deploys the remote attestation smart contract. FIG. 6 shows a structure of the remote attestation smart contract. The structure of the smart contract may include a plurality of pieces of data (data). The plurality of pieces of data may be, for example, the following pieces of data: an owner (owner), an evidence writer (evidence writer), an evidence reader (evidence reader), a device controller (device controller), a device (device), and a storage unit. Each piece of data may include public key information and account information corresponding to a device. Evidence of each node is stored in the storage unit, and is indexed by using a public key of the device. The evidence is the attestation information.

A deployment process is considered that one transaction is completed. Input parameters include code of the smart contract, an owner group, and sufficient fees, to pay for creating a smart contract account on a blockchain. The transaction is signed by using a private key of the remote attestation solution deployer.

During construction of the smart contract, a database is created and an owner group (owner group) transferred during creation and transaction of the smart contract is used to initialize an owner table. The owner group can be used to register writers, readers, and devices.

As shown in FIG. 7, the smart contract opens a registration/deregistration interface for a member of the owner group (member of the owner group), to add a user to roles that can continue to perform a further operation. These roles can be device controllers, evidence writers, and evidence readers. The user may be the first node, or may be the second node.

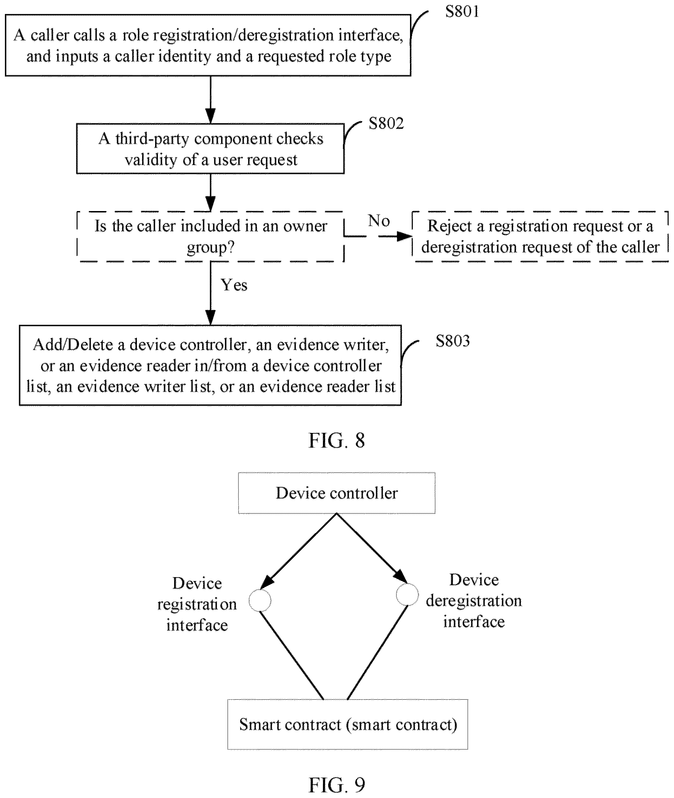

A registration/deregistration procedure may be shown in FIG. 8. Specifically, the following steps are included.

S801: A caller calls a role registration/deregistration interface, and inputs a caller identity and a requested role type.

The caller may be the first node, and the first node registers identity information with the smart contract. The identity information includes an identity used to record the attestation information. For example, the first node calls the role registration/deregistration interface, and inputs the caller identity and the requested role type as an evidence writer. The caller may be the second node, and the second node registers identity information with the smart contract. The identity information includes an identity used to read the attestation information. For example, the second node calls the role registration/deregistration interface, and inputs the caller identity and the requested role type as an evidence reader.

S802: A third-party component checks validity of a user request.

If the caller is included in the owner group, S803 is performed. Otherwise, a registration/deregistration request of the caller is rejected.

S803: Add/Delete a device controller, an evidence writer, or an evidence reader in/from a device controller list, an evidence writer list, or an evidence reader list.

Specifically, if the role type is a device controller, a device controller is added/deleted in/from the device controller list. If the role type is an evidence writer, an evidence writer is added/deleted in/from the evidence writer list. If the role type is an evidence reader, an evidence reader is added/deleted in/from the evidence reader list.

As shown in FIG. 9, the remote attestation smart contract provides a device registration/deregistration interface. The device registration interface and the device deregistration interface may be a same interface, or may be two different interfaces. The device controller may use the device registration/deregistration interface to add/delete a device in/from the smart contract. The device may be the first node, or may be the second node.

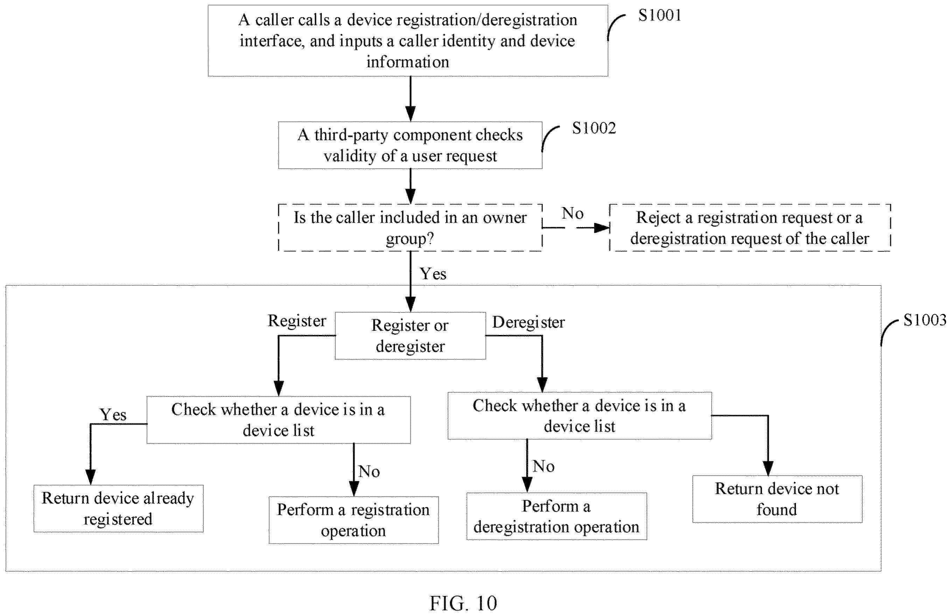

A procedure of adding/deleting a device in/from a smart contract is shown in FIG. 10, and specifically includes the following steps.

S1001: The caller calls the device registration/deregistration interface, and inputs the caller identity and device information.

S1002: The third-party component checks validity of the caller.

If the caller is in the device controller list, step S1003 continues to be performed. Otherwise, a device registration/deregistration request thereof is rejected.

S1003: Check whether a device is in a device list, where if the device is requested to be registered and the device is in the device list, return device already registered; or if the device is requested to be registered and the device is in the device list, perform a registration operation; and if the device is requested to be deregistered and the device is not in the device list, return device not found; or if the device is requested to be deregistered and the device is in the device list, perform a device deregistration operation.

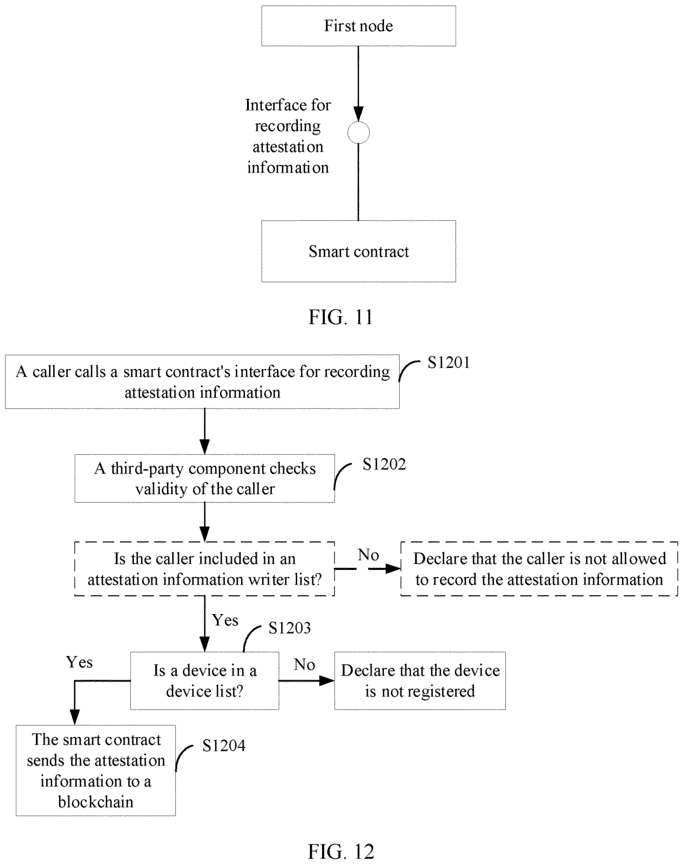

As shown in FIG. 11, the smart contract provides an interface for recording attestation information, and the first node may call the interface to record the attestation information about the first node. The first node may be an attester, a verifier, or an observer (observer).

As shown in FIG. 12, a procedure in which the caller records the attestation information through the interface of the smart contract is described below.

S1201: The caller calls the smart contract's interface for recording the attestation information, where parameters input to the smart contract may include the caller identity, the device information, and the attestation information.

The caller may be the first node.

S1202: The third-party component checks the validity of the caller.

If the caller is in an attestation information writer list, step S1203 continues to be performed. Otherwise, it is declared that the caller is not allowed to record the attestation information.

S1203: If the device is in the device list, step S1204 continues to be performed. Otherwise, it is declared that the device is not registered.

The device may be the first node.

S1204: The smart contract sends the attestation information to the blockchain.

Specifically, the attestation information may be sent to each blockchain node on the blockchain.

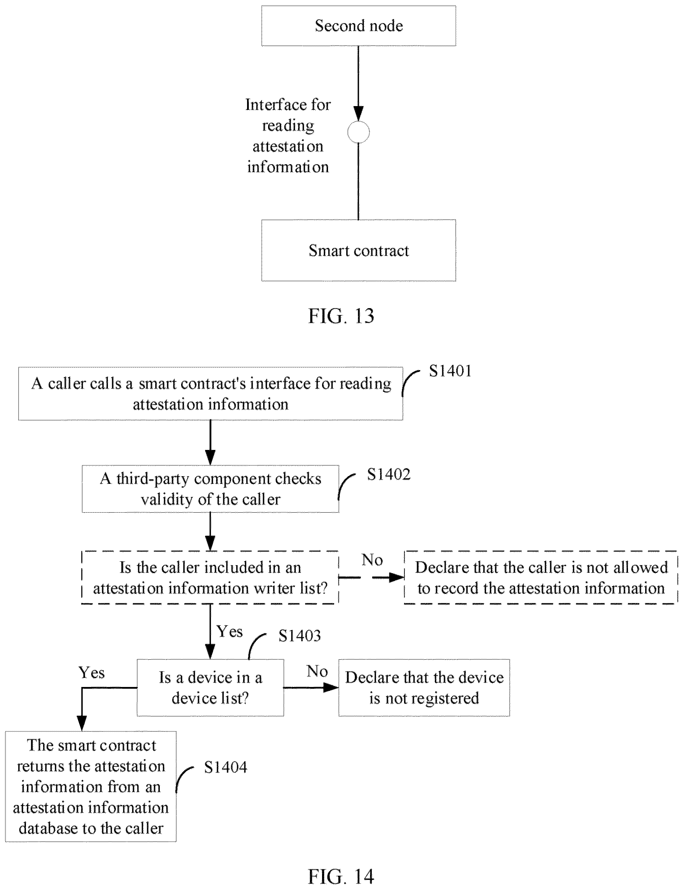

As shown in FIG. 13, the smart contract provides an interface for reading attestation information, and the second node may call the interface to read the attestation information about the first node. The second node may be an attester, a verifier, or an observer (observer).

As shown in FIG. 14, a procedure in which the caller reads the attestation information through the interface of the smart contract is described below.

S1401: The caller calls the smart contract's interface for reading the attestation information, where parameters input to the smart contract may include the caller identity and the device information.

The caller may be the second node.

S1402: The third-party component checks the validity of the caller.

If the caller is in an attestation information reader list, step S1403 continues to be performed. Otherwise, it is declared that the caller is not allowed to read the attestation information.

S1403: If the device is in the device list, step S1404 continues to be performed. Otherwise, it is declared that the device is not registered.

The device may be the second node.

S1404: The smart contract returns the attestation information from an attestation information database to the caller.

The first node sends the attestation information to the first blockchain, and the first node may be any node that needs to upload its own attestation information. The second node obtains the attestation information based on the first blockchain, and the second node may be any node that needs to verify whether the first node is trusted. It may be understood that M first nodes may send the attestation information to the first blockchain, and N second nodes obtain the attestation information about any one or more of the M first nodes based on the first blockchain. M and N are both positive integers. For example, if 10 nodes need to verify each other and a point-to-point attestation manner is used, a total of $C_{10}^{2} = 45$ pairs of attestation are required. By using the trusted attestation method provided in this application, each node only needs to generate one piece of attestation information and send the attestation information to the blockchain, so that the remaining 9 nodes can be verified. This method reduces computing complexity, improves running efficiency, and saves resources, which is applicable to a high-concurrency and low-latency application scenario.

The first node sends the attestation information to the first blockchain, and the first node may send the attestation information to the first blockchain via an off-chain relay (off-chain relay) node. An interaction between the first node and another node may be completed via the off-chain relay node. Similarly, an interaction between the second node and another node may also be completed via the off-chain relay node.

A trigger manner for the first node to send the attestation information to the first blockchain may include the following several types.

Trigger manner 1: triggered by the first smart contract.

The first smart contract triggers an attestation information collection event, and the first node senses the event. When determining that the smart contract triggers the attestation information collection event, the first node sends the attestation information to the smart contract.

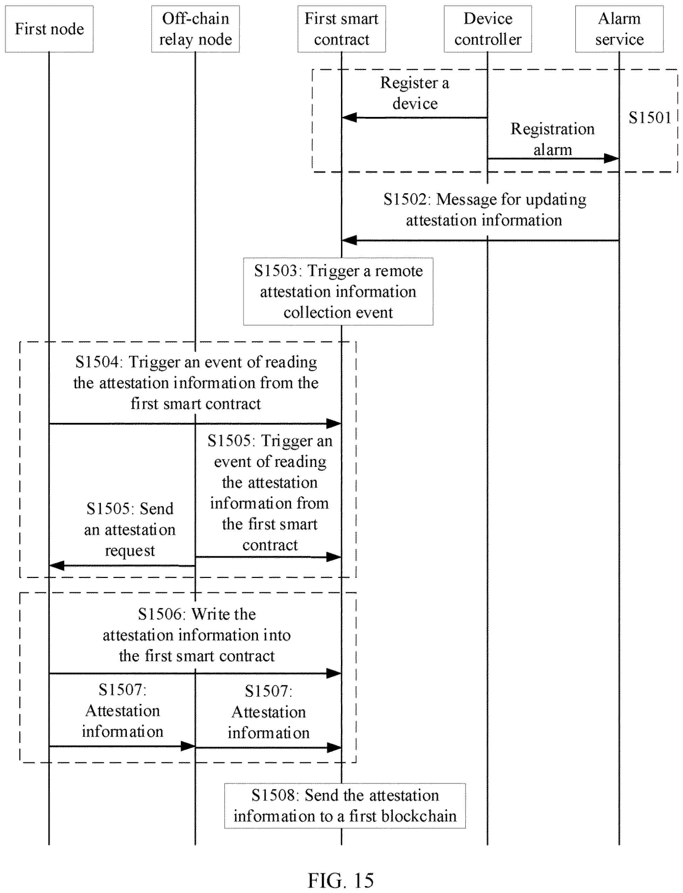

Based on the trigger manner 1, as shown in FIG. 15, an implementation process in which the first node sends the attestation information to the first blockchain in an application scenario is provided.

A device controller sets a device in an attestation system based on the first blockchain, for example, sets a first node. It is assumed that the first blockchain provides an alarm service, and the alarm service is another smart contract and is set to call the first smart contract, to refresh attestation information about the device. Once the first smart contract receives an alarm notification, the attestation information collection event is triggered, and remote attestation is performed.

S1501: The device controller calls the first smart contract to register the device, and sends a registration alarm to the alarm service on the first blockchain.

S1502: The alarm service sends a message for updating the attestation information to the first smart contract.

S1503: The first smart contract triggers a remote attestation information collection event.

After S1503, S1504 or S1505 may be performed.

S1504: If the first node can perform polling or register with the first blockchain, the first node may trigger an event of reading the attestation information from the first smart contract. After S 1504, S1506 or S1507 may be performed.

S1505: If the first node cannot perform polling or register with the first blockchain, the off-chain relay node triggers an event of reading the attestation information from the first smart contract, and sends an attestation request to the first node after triggering the event. After S1505, S1506 or S1507 may be performed.

S1506: If the first node can be directly written into the blockchain, the first node writes the attestation information into the first smart contract.

After S1506, step S1508 may be further performed.

S 1507: If the first node cannot be directly written into the blockchain, the first node sends the attestation information to the off-chain relay node, and the off-chain relay node uploads the attestation information to the smart contract.

After S 1507, step S1508 may be further performed.

S1508: The smart contract sends the attestation information to the first blockchain.

The smart contract may first verify consistency of the first node, and then send the attestation information to the first blockchain. The smart contract may update each blockchain node after a consensus.

Trigger manner 2: triggered by the off-chain relay node.

The off-chain relay node triggers an attestation information collection event, the off-chain relay node sends request information to the first node, the first node receives the request information from the off-chain relay node, and the first node sends the attestation information to the smart contract based on the request information.

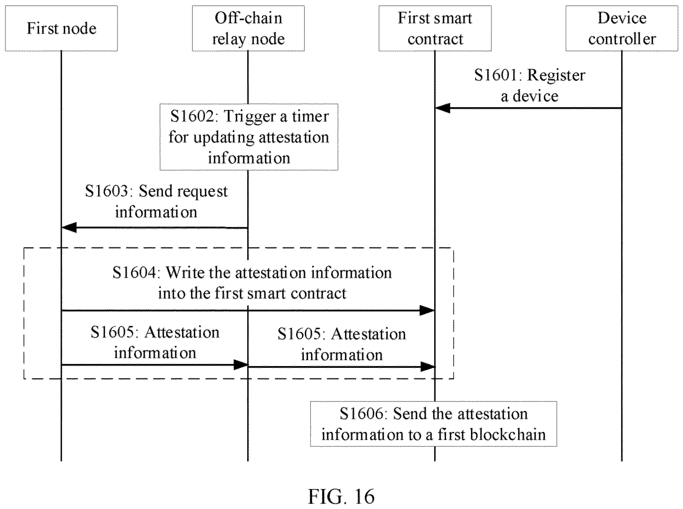

Based on the trigger manner 2, as shown in FIG. 16, an implementation process in which the first node sends the attestation information to the first blockchain in an application scenario is provided.

S1601: A device controller calls the first smart contract to register a device, for example, register a first node.

S1602: The off-chain relay node triggers a timer for updating the attestation information.

S1603: The off-chain relay node sends request information to the first node.

The request information is used to request to upload the attestation information about the first node.

After S1603, S1604 or S1605 is performed.

S1604: If the first node can be directly written into the blockchain, the first node writes the attestation information into the first smart contract.

That the first node can be directly written into the blockchain may also be considered that the first node may interact with the blockchain. When the first node writes the attestation information into the first smart contract, the first node creates a transaction to write the attestation information.

After S1604, step S1606 may be performed.

S1605: If the first node cannot be directly written into the blockchain, the first node sends the attestation information to the off-chain relay node, and the off-chain relay node uploads the attestation information to the smart contract.

After S1605, step S1606 may be performed.

S1606: The smart contract sends the attestation information to the first blockchain.

Trigger manner 3: triggered by the first node.

The first node may perform triggering based on an event, or may periodically perform triggering based on a timer.

The first node sends the attestation information to the first smart contract based on the event or periodically.

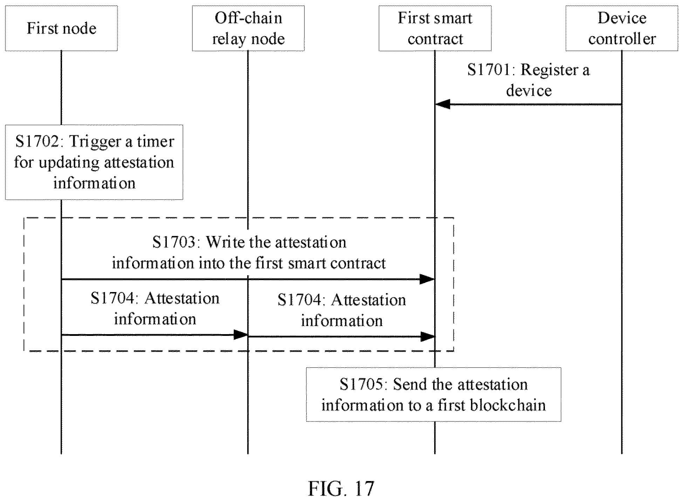

Based on the trigger manner 3, as shown in FIG. 17, an implementation process in which the first node sends the attestation information to the first blockchain in an application scenario is provided.

S1701: A device controller calls the first smart contract to register a device, for example, register a first node.

S1702: The first node triggers a timer for updating the attestation information.

After S1702, S1703 or S1704 is performed.

S1703: If the first node can be directly written into the blockchain, the first node writes the attestation information into the first smart contract.

That the first node can be directly written into the blockchain may also be considered that the first node may interact with the blockchain. When the first node writes the attestation information into the first smart contract, the first node creates a transaction to write the attestation information.

After S1703, step S1705 may be further performed.

S1704: If the first node cannot be directly written into the blockchain, the first node sends the attestation information to the off-chain relay node, and the off-chain relay node uploads the attestation information to the smart contract.

After S 1704, step S1705 may be further performed.

S1705: The smart contract sends the attestation information to the first blockchain.

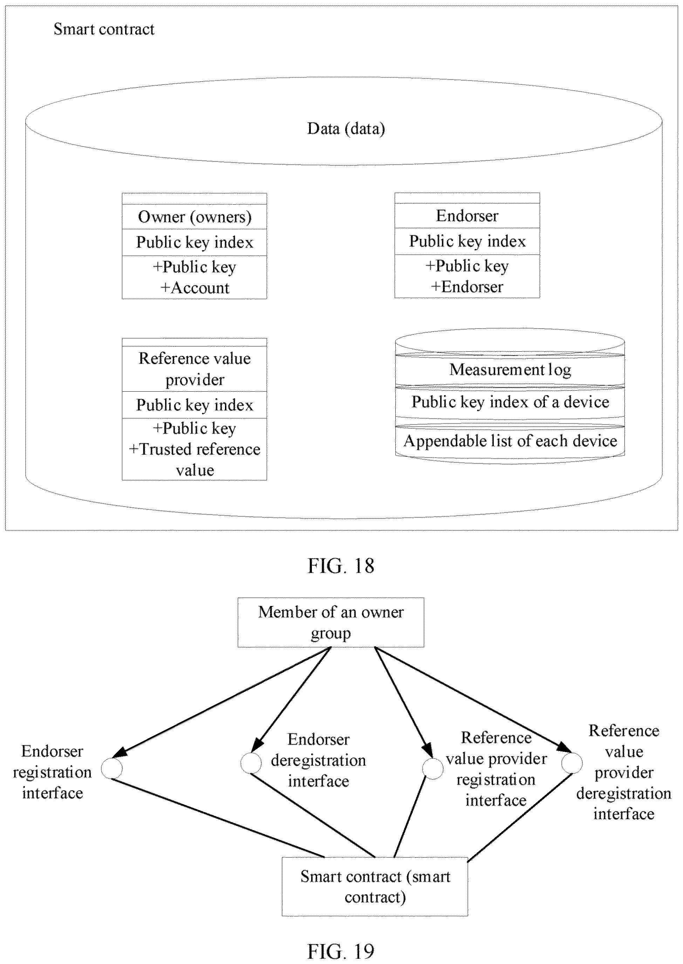

Similar to the structure of the smart contract shown in FIG. 6, as shown in FIG. 18, a structure of the smart contract may include several pieces of data: an owner of the smart contract (or a publisher of the smart contract), an endorser, a reference value provider, and a measurement log (verification log). The measurement log is verified log information.

The structure of the smart contract shown in FIG. 18 may be combined with the structure shown in FIG. 6, to form a smart contract, which may be called by the first node and/or the second node.

The structure of the smart contract shown in FIG. 18 may be a structure of the second smart contract.

As shown in FIG. 19, the smart contract opens a registration/deregistration interface for a member of an owner group. The member of the owner group may use the interface to add a user to roles that can continue to perform a further operation. These roles may be an endorser or a reference value provider.

When the first node and the second node share a same smart contract, the first node sends the attestation information to the first blockchain via the smart contract, and the second node obtains the attestation information based on the first blockchain via the smart contract. For example, the second node sends information about the first node to the smart contract, and the smart contract returns, to the second node, the attestation information or an attestation result indicating whether the first node is trusted.

When the first node and the second node use different smart contracts, for example, the first node sends the attestation information to the first blockchain via the first smart contract, and the second node obtains the attestation information based on the first blockchain via the second smart contract. In this case, the second node sends information about the first node to the second smart contract, the second smart contract obtains the attestation information about the first node from the first smart contract, and the second smart contract returns the attestation information about the first node to the second node.

The second node may actively trigger an event of obtaining the attestation information about the first node. For example, the second node may trigger, based on an event or periodically, to obtain the attestation information about the first node. Alternatively, obtaining the attestation information by the second node may be triggered by the smart contract. For example, the smart contract triggers an attestation information verification event, and the second node determines that the smart contract triggers the attestation information verification event, and obtains the attestation information about the first node from the smart contract. Alternatively, the off-chain relay node may trigger the second node to obtain the attestation information. The off-chain relay node triggers an attestation information collection event, the off-chain relay node sends request information to the second node, and the second node obtains the attestation information about the first node from the smart contract based on the request information. When the second node obtains the attestation information about the first node from the smart contract, the second node may send information about the first node to the smart contract, and the smart contract returns, to the second node, the attestation information about the first node or an attestation result indicating whether the first node is trusted.

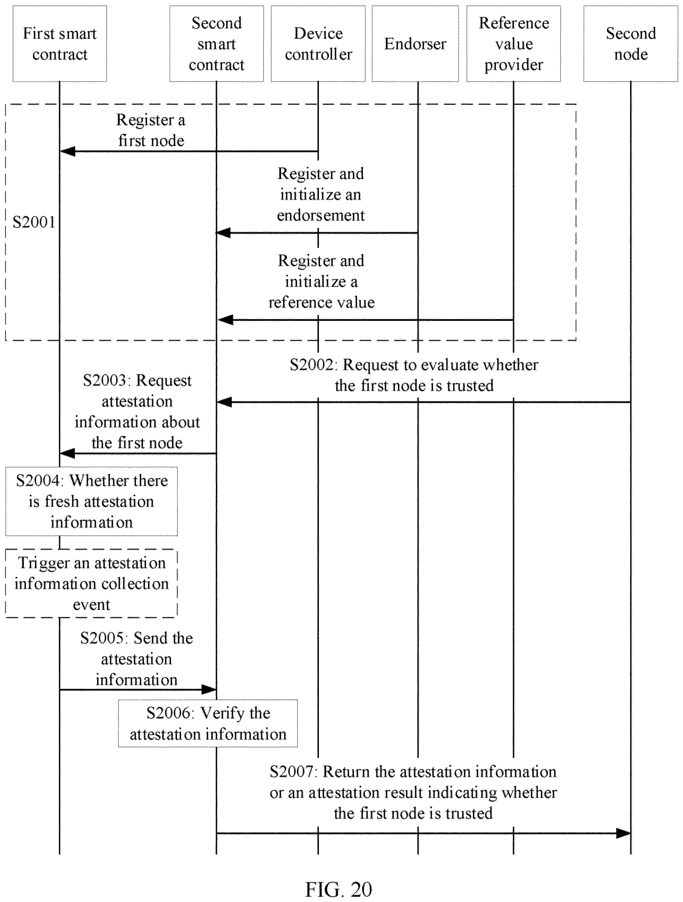

As shown in FIG. 20, an implementation process in which the first node sends the attestation information to the first blockchain and the second node obtains the attestation information based on the first blockchain in an application scenario is provided.

S2001: A device controller sets a device in an attestation system based on the first blockchain, for example, sets a first node and/or a second node.

The step may include: The device controller registers the first node with the first smart contract; an endorser registers and initializes a related endorsement with the second smart contract; and a reference value provider registers and initializes a related reference value with the second smart contract.

S2002: The second node requests the second smart contract to evaluate whether a target device (that is, the first node) is trusted, or the second node requests attestation information about the target device to the second smart contract.

S2003: The second smart contract sends a request to the first smart contract, to request the attestation information about the first node.

S2004: The first smart contract verifies whether there is fresh attestation information available on the blockchain, where if there is fresh attestation information available on the blockchain, S2005 is performed; or otherwise, the first smart contract triggers an attestation information collection event, and after the attestation information is received, S2005 is performed. For a procedure after the first smart contract triggers the attestation information collection event, refer to the description in the trigger manner 1. Details are not described herein again. After receiving the attestation information, the first smart contract may first verify the attestation information and store the attestation information in the first blockchain.

S2005: The first smart contract sends the attestation information to the second smart contract.

S2006: The second smart contract verifies the attestation information.

For example, the second smart contract verifies a signature, to attest that the signature is from a legitimate trusted platform module (TPM). The second smart contract may also verify a quote and log attestation to attest that the attestation information is not tampered with, further verify a timestamp to attest generation time of the attestation information, and finally verify trustworthiness of the attestation information by using a reference value (reference value).

S2007: The second smart contract returns, to the second node, the attestation information about the first node or an attestation result indicating whether the first node is trusted.

A communication apparatus provided in embodiments of this application is described based on the foregoing method embodiments.

An embodiment of this application provides a communication apparatus. The communication apparatus includes, for example, a processing unit and a transceiver unit (or referred to as a communication unit). The processing unit may be configured to implement a processing function of the first node according to any one of the foregoing method embodiments, and the transceiver unit may be configured to implement all or some receiving and sending functions of the first node according to any one of the foregoing method embodiments. Alternatively, the processing unit may be configured to implement a processing function implemented by the second node according to any one of the foregoing method embodiments, and the transceiver unit may be configured to implement all or some receiving and sending functions of the second node according to any one of the foregoing method embodiments. Alternatively, the processing unit may be configured to implement a processing function implemented by the first blockchain node according to any one of the foregoing method embodiments, and the transceiver unit may be configured to implement all or some receiving and sending functions of the first blockchain node according to any one of the foregoing method embodiments.

When the communication apparatus is configured to perform the method performed by the first node, the processing unit may include an obtaining unit and a determining unit. Optionally, the processing unit may further include a registration unit.

When the communication apparatus is configured to perform the method performed by the second node, the processing unit may include an obtaining unit and a verification unit. Optionally, the processing unit may further include a registration unit.

When the communication apparatus is configured to perform the method performed by the first blockchain node, the processing unit may be a verification unit.

Optionally, the processing unit and/or the transceiver unit may be implemented by using a virtual module. For example, the processing unit may be implemented by using a software functional unit or a virtual apparatus, and the transceiver unit may be implemented by using a software functional unit or a virtual apparatus. Alternatively, the processing unit and/or the transceiver unit may be implemented by using a physical apparatus (for example, a circuit system and/or a processor). The following describes a case in which the processing unit and the transceiver unit are implemented by using the physical apparatus.

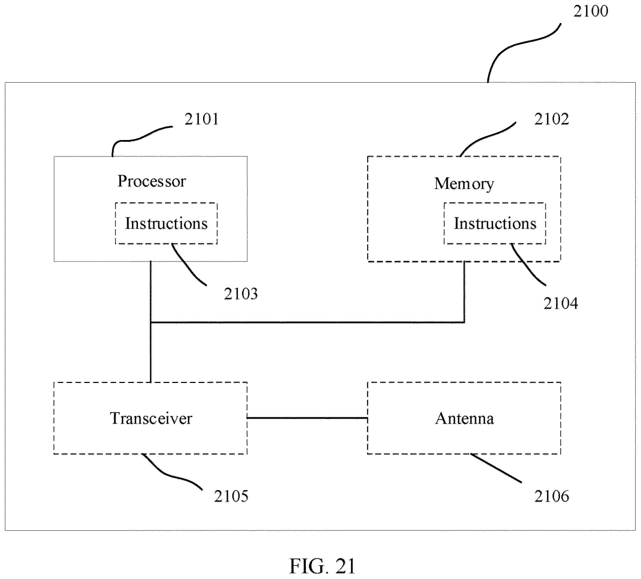

FIG. 21 is a schematic diagram of a structure of a communication apparatus according to an embodiment of this application. The communication apparatus 2100 may be the first node, a circuit system of the first node, a circuit system that can be used in the first node, or the like in any one of the foregoing method embodiments, and is configured to implement the method of the first node corresponding to the foregoing method embodiments. Alternatively, the communication apparatus 2100 may be the second node, a circuit system of the second node, a circuit system that can be used in the second node, or the like in any one of the foregoing method embodiments, and is configured to implement the method of the second node corresponding to the foregoing method embodiments. Alternatively, the communication apparatus 2100 may be the first blockchain node, a circuit system of the first blockchain node, a circuit system that can be used in the first blockchain node, or the like in any one of the foregoing method embodiments, and is configured to implement the method of the first blockchain node corresponding to the foregoing method embodiments. For a specific function, refer to the description in the foregoing method embodiments. For example, a circuit system is a chip system.

The communication apparatus 2100 includes one or more processors 2101. The processor 2101 may implement a specific control function. The processor 2101 may be a general-purpose processor, a dedicated processor, or the like. For example, the processor 2101 includes a baseband processor and a central processing unit. The baseband processor may be configured to process a communication protocol and communication data. The central processing unit may be configured to control the communication apparatus 2100, and execute a software program and/or process data. Different processors may be independent devices, or may be disposed in one or more processing circuits, for example, integrated in one or more application-specific integrated circuits.

Optionally, the communication apparatus 2100 includes one or more memories 2102 configured to store instructions 2104. The instructions 2104 may be run on the processor, so that the communication apparatus 2100 performs the method described in the foregoing method embodiments. Optionally, the memory 2102 may further store data. The processor and the memory may be separately disposed, or may be integrated together.

Optionally, the communication apparatus 2100 may store instructions 2103 (also referred to as code or a program sometimes). The instructions 2103 may be run on the processor, so that the communication apparatus 2100 performs the method described in the foregoing embodiments. The processor 2101 may store data.

For example, the processing unit is implemented by using the one or more processors 2101, or the processing unit is implemented by using the one or more processors 2101 and the one or more memories 2102, or the processing unit is implemented by using the one or more processors 2101, the one or more memories 2102, and the instructions 2103.

Optionally, the communication apparatus 2100 may further include a transceiver 2105 and an antenna 2106. The transceiver 2105 may be referred to as a transceiver unit, a transceiver device, a transceiver circuit, a transceiver, an input/output interface, or the like, and is configured to implement receiving and sending functions of the communication apparatus 2100 through the antenna 2106. For example, the transceiver unit is implemented by using the transceiver 2105, or the transceiver unit is implemented by using the transceiver 2105 and the antenna 2106.

Optionally, the communication apparatus 2100 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It can be understood that, in some embodiments, the communication apparatus 2100 may include more or fewer components, or some components are integrated, or some components are split. These components may be implemented by hardware, software, or a combination of software and hardware.

The processor 2101 and the transceiver 2105 described in embodiments of this application may be implemented on an integrated circuit (integrated circuit, IC), an analog IC, a radio frequency integrated circuit (radio frequency identification, RFID), a mixed-signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a relatively large device (for example, a module that may be embedded in another device). For details, refer to descriptions of the first node, the second node, and the first blockchain node in the foregoing embodiments. Details are not described herein again.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although preferred embodiments of this application are described, a person skilled in the art can make changes and modifications to these embodiments after they learn of a basic inventive concept. Therefore, the appended claims are intended to be construed as including the preferred embodiments and all changes and modifications that fall within the scope of this application.

Clearly, a person skilled in the art can make various modifications and variations to embodiments of this application without departing from the spirit and scope of embodiments of this application. In this way, this application is intended to cover these modifications and variations provided that the modifications and variations of embodiments of this application fall within the scope of the claims of this application and equivalent technologies thereof.

**Claims**

1. A trusted attestation method, comprising:

   obtaining, by a first node, information about a first blockchain; and
   determining, by the first node, attestation information based on the information about the first blockchain, wherein the attestation information is used to remotely attest whether the first node is trusted.

2. The method according to claim 1, wherein the information about the first blockchain comprises any one or more types of the following information: a timestamp of a first block, a hash value of the first block, a hash value of a previous block of the first block, a hash string of a plurality of blocks comprising the first block, a merkle merkle tree root of the plurality of blocks comprising the first block, a random number in the first block, a timestamp of a first transaction, a hash value of the first transaction, or a hash string of a plurality of transactions comprising the first transaction, wherein the first block is a block on the first blockchain, and the first transaction is a transaction on the first blockchain.

3. The method according to claim 1 or 2, wherein the first node sends the attestation information to the first blockchain.

4. The method according to any one of claims 1 to 3, wherein the first node sends the attestation information to a smart contract, wherein the smart contract is deployed on a blockchain node on the first blockchain.

5. The method according to claim 3 or 4, wherein the first blockchain comprises a second block;

the second block stores the attestation information; or
the second block stores digest information about the attestation information, wherein the digest information is used to verify integrity of the attestation information, and the attestation information is stored in an off-chain storage node.

6. The method according to claim 4, wherein the method further comprises:
registering, by the first node, identity information with the smart contract, wherein the identity information comprises an identity used to record the attestation information.

7. The method according to claim 4 or 6, wherein the sending, by the first node, the attestation information to a smart contract comprises:

determining, by the first node, that the smart contract triggers an attestation information collection event; and
sending, by the first node, the attestation information to the smart contract, so that the smart contract sends the attestation information to the first blockchain; or sending, by the first node, the attestation information to an off-chain relay node, and sending, by the off-chain relay node, the attestation information to the smart contract, so that the smart contract sends the attestation information to the first blockchain.

8. The method according to claim 4 or 6, wherein the sending, by the first node, the attestation information to the blockchain via a smart contract comprises:

receiving, by the first node, request information from an off-chain relay node; and
sending, by the first node, the attestation information to the smart contract based on the request information, so that the smart contract sends the attestation information to the first blockchain; or sending, by the first node, the attestation information to the off-chain relay node based on the request information, and sending, by the off-chain relay node, the attestation information to the smart contract, so that the smart contract sends the attestation information to the first blockchain.

9. The method according to claim 4 or 6, wherein

the first node periodically sends the attestation information to the smart contract, so that the smart contract sends the attestation information to the blockchain; or
the first node periodically sends the attestation information to an off-chain relay node, and the off-chain relay node sends the attestation information to the smart contract, so that the smart contract sends the attestation information to the blockchain.

10. A trusted attestation method, comprising:

obtaining, by a second node, attestation information about a first node based on a first blockchain, wherein the attestation information comprises information about the first blockchain; and
verifying, by the second node, the attestation information based on the information about the first blockchain, to obtain an attestation result indicating whether the first node is trusted.

11. The method according to claim 10, wherein the information about the first blockchain comprises any one or more types of the following information: a timestamp of a first block, a hash value of the first block, a hash value of a previous block of the first block, a hash string of a plurality of blocks comprising the first block, a merkle merkle tree root of the plurality of blocks comprising the first block, a random number in the first block, a timestamp of a first transaction, a hash value of the first transaction, or a hash string of a plurality of transactions comprising the first transaction, wherein the first block is a block on the first blockchain, and the first transaction is a transaction on the first blockchain.

12. The method according to claim 10 or 11, wherein the obtaining, by a second node, attestation information about a first node from a first blockchain comprises:

> sending, by the second node, information about the first node to a smart contract, wherein the smart contract is deployed on a blockchain node on the first blockchain; and
> receiving, by the second node, the attestation information about the first node from the smart contract.

13. The method according to claim 10 or 11, wherein the obtaining, by a second node, attestation information about a first node from a first blockchain comprises:

> determining, by the second node, that the smart contract triggers an attestation information verification event; and
> receiving, by the second node, the attestation information about the first node from the smart contract.

14. The method according to claim 12 or 13, wherein the method further comprises:
registering, by the second node, identity information with the smart contract, wherein the identity information comprises an identity used to read the attestation information.

15. The method according to any one of claims 10 to 13, wherein the first blockchain comprises a second block;

> the second block stores the attestation information; or
> the second block stores digest information about the attestation information, wherein the digest information is used to verify integrity of the attestation information, and the attestation information is stored in an off-chain storage node.

16. A trusted attestation method, comprising:

> receiving, by a first blockchain node, a first transaction from a first node, wherein the first transaction comprises attestation information, and the attestation information is generated by the first node based on information about a first blockchain;
> verifying, by the first blockchain node, the attestation information; and
> broadcasting, by the first blockchain node, the first transaction to one or more nodes on the first blockchain after verification of the attestation information succeeds.

17. A communication apparatus, comprising:

an obtaining unit, configured to obtain information about a first blockchain; and
a determining unit, configured to determine attestation information based on the information about the first blockchain, wherein the attestation information is used to remotely attest whether the first node is trusted.

18. The apparatus according to claim 17, wherein the information about the first blockchain comprises any one or more types of the following information: a timestamp of a first block, a hash value of the first block, a hash value of a previous block of the first block, a hash string of a plurality of blocks comprising the first block, a merkle merkle tree root of the plurality of blocks comprising the first block, a random number in the first block, a timestamp of a first transaction, a hash value of the first transaction, or a hash string of a plurality of transactions comprising the first transaction, wherein the first block is a block on the first blockchain, and the first transaction is a transaction on the first blockchain.

19. The apparatus according to claim 17 or 18, further comprising:
a sending unit, configured to send the attestation information to the first blockchain.

20. The apparatus according to any one of claims 17 to 19, further comprising:
a sending unit, configured to send the attestation information to a smart contract, wherein the smart contract is deployed on a blockchain node on the first blockchain.

21. The apparatus according to claim 19 or 20, wherein the first blockchain comprises a second block;

> the second block stores the attestation information; or
> the second block stores digest information about the attestation information, wherein the digest information is used to verify integrity of the attestation information, and the attestation information is stored in an off-chain storage node.

22. The apparatus according to claim 20, further comprising:
a registration unit, configured to register identity information with the smart contract, wherein the identity information comprises an identity used to record the attestation information.

23. The apparatus according to claim 20 or 22, wherein when the attestation information is sent to the smart contract, the determining unit is configured to determine that the smart contract triggers an attestation information collection event; and

the sending unit is configured to send the attestation information to the smart contract, so that the smart contract sends the attestation information to the first blockchain; or the first node sends the attestation information to an off-chain relay node, and the off-chain relay node sends the attestation information to the smart contract, so that the smart contract sends the attestation information to the first blockchain.

24. The apparatus according to claim 20 or 22, wherein the apparatus further comprises a receiving unit, and when the attestation information is sent to the blockchain via the smart contract, the receiving unit is configured to receive request information from an off-chain relay node; and
the sending unit is configured to send the attestation information to the smart contract based on the request information, so that the smart contract sends the attestation information to the first blockchain; or the first node sends the attestation information to the off-chain relay node based on the request information, and the off-chain relay node sends the attestation information to the smart contract, so that the smart contract sends the attestation information to the first blockchain.

25. The apparatus according to claim 20 or 22, wherein

the sending unit is configured to periodically send the attestation information to the smart contract, so that the smart contract sends the attestation information to the blockchain; or
the sending unit is configured to periodically send the attestation information to an off-chain relay node, and the off-chain relay node sends the attestation information to the smart contract, so that the smart contract sends the attestation information to the blockchain.

26. A communication apparatus, comprising:

an obtaining unit, configured to obtain attestation information about a first node based on a first blockchain, wherein the attestation information comprises information about the first blockchain; and
a verification unit, configured to verify the attestation information based on the information about the first blockchain, to obtain an attestation result indicating whether the first node is trusted.

27. The apparatus according to claim 26, wherein the information about the first blockchain comprises any one or more types of the following information: a timestamp of a first block, a hash value of the first block, a hash value of a previous block of the first block, a hash string of a plurality of blocks comprising the first block, a merkle merkle tree root of the plurality of blocks comprising the first block, a random number in the first block, a timestamp of a first transaction, a hash value of the first transaction, or a hash string of a plurality of transactions comprising the first transaction, wherein the first block is a block on the first blockchain, and the first transaction is a transaction on the first blockchain.

28. The apparatus according to claim 26 or 27, wherein when the attestation information about the first node is obtained from the first blockchain, the obtaining unit is specifically configured to:

send information about the first node to a smart contract, wherein the smart contract is deployed on a blockchain node on the first blockchain; and
receive the attestation information about the first node from the smart contract.

29. The apparatus according to claim 26 or 27, wherein when the attestation information about the first node is obtained from the first blockchain, the obtaining unit is specifically configured to:

determine that the smart contract triggers an attestation information verification event; and
receive the attestation information about the first node from the smart contract.

30. The apparatus according to claim 28 or 29, wherein the apparatus further comprises:
a registration unit, configured to register identity information with the smart contract, wherein the identity information comprises an identity used to read the attestation information.

31. The apparatus according to any one of claims 26 to 29, wherein the first blockchain comprises a second block;

the second block stores the attestation information; or
the second block stores digest information about the attestation information, wherein the digest information is used to verify integrity of the attestation information, and the attestation information is stored in an off-chain storage node.

32. A communication apparatus, comprising:

a receiving unit, configured to receive a first transaction from a first node, wherein the first transaction comprises attestation information, and the attestation information is generated by the first node based on information about a first blockchain;

a verification unit, configured to verify the attestation information; and

a sending unit, configured to broadcast the first transaction to one or more nodes on the first blockchain after verification of the attestation information succeeds.

33. A communication apparatus, comprising a processor and a memory, wherein the memory is configured to store one or more computer programs, the one or more computer programs comprise computer-executable instructions, and when the communication apparatus runs, the processor executes the one or more computer programs stored in the memory, so that the communication apparatus performs the method according to any one of claims 1 to 9, or the communication apparatus performs the method according to any one of claims 10 to 15, or the communication apparatus performs the method according to claim 16.

34. A chip system, wherein the chip system comprises a logic circuit and an input/output interface, wherein

the input/output interface is configured to obtain information about a first blockchain, and the logic circuit is configured to perform the method according to any one of claims 1 to 9; or

the input/output interface is configured to communicate with another communication apparatus other than the chip system, and the logic circuit is configured to perform the method according to any one of claims 10 to 15; or

the input/output interface is configured to receive a first transaction from a first node, wherein the first transaction comprises attestation information, and the attestation information is generated by the first node based on information about a first blockchain; and the logic circuit is configured to verify the attestation information, and broadcast the first transaction to one or more nodes on the first blockchain after verification of the attestation information succeeds.

35. A computer-readable storage medium, wherein the computer-readable storage medium is configured to store a computer program, and when the computer program is run on a computer, the computer is enabled to perform the method according to any one of claims 1 to 9, or the computer is enabled to perform the method according to any one of claims 10 to 15, or the computer is enabled to perform the method according to claim 16.

36. A computer program product, wherein the computer program product comprises a computer program, and when the computer program is run on a computer, the computer is enabled to perform the method according to any one of claims 1 to 9, or the computer is enabled to perform the method according to any one of claims 10 to 15, or the computer is enabled to perform the method according to claim 16.

37. A communication system, comprising a first node and a second node, wherein the first node is configured to perform the method according to any one of claims 1 to 9, and the second node is configured to perform the method according to any one of claims 10 to 15.

38. The communication system according to claim 37, further comprising a first blockchain node, wherein the first blockchain node is configured to perform the method according to claim 16.

FIG. 1

Blockchain node

FIG. 2

A first node obtains information about a first blockchain — S301

The first node determines attestation information based on the information about the first blockchain — S302

The first node sends the attestation information to the first blockchain — S303

FIG. 3

A second node obtains attestation information about a first node based on a first blockchain — S401

The second node verifies the attestation information based on information about the first blockchain, to obtain an attestation result indicating whether the first node is trusted — S402

FIG. 4

FIG. 5

Smart contract

Data (data)

| Owner (owners) |
| --- |
| Public key index |
| +Public key +Account |

| Evidence writer |
| --- |
| Public key index |
| +Public key +Account |

| Evidence reader |
| --- |
| Public key index |
| +Public key +Account |

| Device controller |
| --- |
| Public key index |
| +Public key +Account |

| Device |
| --- |
| Public key index |
| +Public key |

Attestation information storage

Public key index of the device

Appendable list of each device

FIG. 6

Member of an owner group

Registration interface

Deregistration interface

Smart contract (smart contract)

FIG. 7

A caller calls a role registration/deregistration interface, and inputs a caller identity and a requested role type    S801

A third-party component checks validity of a user request    S802

Is the caller included in an owner group?    No    Reject a registration request or a deregistration request of the caller

Yes

Add/Delete a device controller, an evidence writer, or an evidence reader in/from a device controller list, an evidence writer list, or an evidence reader list    S803

FIG. 8

Device controller

Device registration interface

Device deregistration interface

Smart contract (smart contract)

FIG. 9

A caller calls a device registration/deregistration interface, and inputs a caller identity and device information — S1001

A third-party component checks validity of a user request — S1002

Is the caller included in an owner group? — No → Reject a registration request or a deregistration request of the caller

Yes

Register or deregister — S1003

Register

Deregister

Check whether a device is in a device list

Yes

No

Check whether a device is in a device list

No

Return device already registered

Perform a registration operation

Perform a deregistration operation

Return device not found

FIG. 10

EP 4 440 032 A1

First node

Interface for
recording
attestation
information

Smart contract

**FIG. 11**

A caller calls a smart contract's interface for recording attestation information — S1201

A third-party component checks validity of the caller — S1202

Is the caller included in an attestation information writer list? — No → Declare that the caller is not allowed to record the attestation information

Yes — S1203

Is a device in a device list? — No → Declare that the device is not registered

Yes

The smart contract sends the attestation information to a blockchain — S1204

**FIG. 12**

29

Second node

Interface for
reading
attestation
information

Smart contract

FIG. 13

A caller calls a smart contract's interface for reading attestation information — S1401

A third-party component checks validity of the caller — S1402

Is the caller included in an attestation information writer list? — No → Declare that the caller is not allowed to record the attestation information

Yes — S1403

Yes ← Is a device in a device list? — No → Declare that the device is not registered

The smart contract returns the attestation information from an attestation information database to the caller — S1404

FIG. 14

FIG. 15

FIG. 16

FIG. 17

Smart contract

Data (data)

| Owner (owners) |
| --- |
| Public key index |
| +Public key<br>+Account |

| Endorser |
| --- |
| Public key index |
| +Public key<br>+Endorser |

| Reference value<br>provider |
| --- |
| Public key index |
| +Public key<br>+Trusted reference<br>value |

| Measurement log |
| --- |
| Public key index of a device |
| Appendable list of each device |

FIG. 18

Member of an owner group

Endorser registration interface

Endorser deregistration interface

Reference value provider registration interface

Reference value provider deregistration interface

Smart contract (smart contract)

FIG. 19

| First smart contract | Second smart contract | Device controller | Endorser | Reference value provider | Second node |
|---|---|---|---|---|---|

Register a first node

S2001

Register and initialize an endorsement

Register and initialize a reference value

S2002: Request to evaluate whether the first node is trusted

S2003: Request attestation information about the first node

S2004: Whether there is fresh attestation information

Trigger an attestation information collection event

S2005: Send the attestation information

S2006: Verify the attestation information

S2007: Return the attestation information or an attestation result indicating whether the first node is trusted

FIG. 20

2100

2101

2102

Processor

Instructions

Memory

Instructions

2103

2104

Transceiver

Antenna

2105

2106

FIG. 21

## INTERNATIONAL SEARCH REPORT

International application No.

**PCT/CN2022/134661**

**A.    CLASSIFICATION OF SUBJECT MATTER**

H04L9/32(2006.01)i;G06F21/00(2013.01)i;H04L9/08(2006.01)i

According to International Patent Classification (IPC) or to both national classification and IPC

**B.    FIELDS SEARCHED**

Minimum documentation searched (classification system followed by classification symbols)

H04 , G06

Documentation searched other than minimum documentation to the extent that such documents are included in the fields searched

Electronic data base consulted during the international search (name of data base and, where practicable, search terms used)

CJFD, CNKI, CNTXT, ENTXT, ENTXTC, IEEE: 可信, 证明, 远程证明, 区块链, 挑战, 完整性, 验证, 智能合约, credibility, credible, trustable, remote, certificat+, attest+, verif+, block chain, challenge, smart contract

**C.    DOCUMENTS CONSIDERED TO BE RELEVANT**

| Category* | Citation of document, with indication, where appropriate, of the relevant passages | Relevant to claim No. |
|---|---|---|
| X | CN 113708935 A (BEIHANG UNIVERSITY) 26 November 2021 (2021-11-26) description, paragraphs 44-98 | 1-3, 10-11, 16-19, 26-27, 32-38 |
| Y | CN 113708935 A (BEIHANG UNIVERSITY) 26 November 2021 (2021-11-26) description, paragraphs 44-98 | 4-9, 12-15, 20-25, 28-31 |
| Y | WO 2021184975 A1 (ALIPAY (HANGZHOU) INFORMATION TECHNOLOGY CO., LTD.) 23 September 2021 (2021-09-23) description, paragraphs 27-59 | 4-9, 12-15, 20-25, 28-31 |
| A | US 2016275461 A1 (RIVETZ CORP.) 22 September 2016 (2016-09-22) entire document | 1-38 |
| A | US 2021117971 A1 (ALIPAY (HANGZHOU) INFORMATION TECHNOLOGY CO., LTD.) 22 April 2021 (2021-04-22) entire document | 1-38 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 February 2023** | **13 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| International application No. |
| --- |
| **PCT/CN2022/134661** |

| Patent document cited in search report | | | Publication date (day/month/year) | Patent family member(s) | | | Publication date (day/month/year) |
| --- | --- | --- | --- | --- | --- | --- | --- |
| CN | 113708935 | A | 26 November 2021 | None | | | |
| WO | 2021184975 | A1 | 23 September 2021 | None | | | |
| US | 2016275461 | A1 | 22 September 2016 | HK | 1249945 | A1 | 16 November 2018 |
| | | | | KR | 20170129866 | A | 27 November 2017 |
| | | | | RU | 2673842 | C1 | 30 November 2018 |
| | | | | EP | 3271824 | A1 | 24 January 2018 |
| | | | | EP | 3271824 | A4 | 05 September 2018 |
| | | | | WO | 2016154001 | A1 | 29 September 2016 |
| | | | | AU | 2016235539 | A1 | 05 October 2017 |
| | | | | AU | 2016235539 | B2 | 24 January 2019 |
| | | | | CA | 2980002 | A1 | 29 September 2016 |
| | | | | JP | 2018516026 | A | 14 June 2018 |
| US | 2021117971 | A1 | 22 April 2021 | WO | 2020098837 | A2 | 22 May 2020 |
| | | | | WO | 2020098837 | A3 | 17 December 2020 |
| | | | | WO | 2020098837 | A9 | 31 March 2022 |
| | | | | EP | 3794483 | A2 | 24 March 2021 |
| | | | | EP | 3794483 | A4 | 28 April 2021 |
| | | | | US | 11200570 | B2 | 14 December 2021 |
| | | | | SG | 11202012924 | WA | 28 January 2021 |

Form PCT/ISA/210 (patent family annex) (July 2022)

**EP 4 440 032 A1**

**Patent documents cited in the description**

- CN 202111593395